# EUROPEAN PATENT SPECIFICATION

(11) **EP 4 404 038 B1**
(45) Date of publication and mention of the grant of the patent: **03.12.2025**
(21) Application number: 23826035.0
(22) Date of filing: 17.05.2023
(51) Int. Cl.: G06F 3/0481, G06F 3/04817, G06F 3/0482, G06F 3/0483, G06F 3/0484, G06F 3/04842, G06F 3/0485, G06F 3/04883, G06F 3/04886, G06F 9/451, H04M 1/02, H04M 1/72469

(54) **INTERFACE DISPLAY METHOD AND APPARATUS**
SCHNITTSTELLENANZEIGEVERFAHREN UND -VORRICHTUNG
PROCÉDÉ ET APPAREIL D'AFFICHAGE D'INTERFACE

(30) Priority: 20.06.2022 CN 202210699547
(43) Date of publication of application: 24.07.2024
(73) Proprietor: Honor Device Co., Ltd., Shenzhen, Guangdong 518040 (CN)
(72) Inventor: HUANG, Liwei, Shenzhen, Guangdong 518040 (CN)
(74) Representative: Isarpatent
(86) International application number: PCT/CN2023/094893
(87) International publication number: WO 2023/246386

(56) References cited:
- WO-A1-2016/036431
- CN-A- 104 808 928
- CN-A- 105 700 708
- CN-A- 107 613 110
- CN-A- 111 541 811
- CN-A- 113 722 027
- US-A1- 2020 278 775

## Description

### TECHNICAL FIELD

This disclosure relates to the field of terminal technologies, and in particular, the invention relates to an interface display method and apparatus.

### BACKGROUND

With popularization and development of the Internet, terminal devices become a part of people's work and life. As the terminal devices become larger and longer, there are more types of applications. Consequently, it is more difficult to select applications or cards in desktop states of the terminal devices.

Generally, a terminal device can select any application or card on a desktop based on a single-hand operation of a user.

However, in many scenarios, it is difficult for the user to select the application or the card through the single-hand operation.

Alternatively, to find and open the application, the user may need to perform page turning operations such as sliding and lifting a plurality of times, and then select the application for opening. These operations are complicated.
WO 2016/036431A1 relates to user interface techniques aiming at improving single-handed operation of portable electronic devices with large touch displays.
CN 107613110 A relates also to a method for adjusting the interface display of a terminal device, particularly aimed at improving the ergonomics of one-handed operation on large-screen smartphones.

### SUMMARY

The aim of the present invention is to provide an interface display method and apparatus, to move an icon displayed on a desktop based on a trigger operation performed by a user on a navigation point on the desktop, so that the user can trigger an element in any region of the desktop with one hand. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, an embodiment of the application provides an interface display method according to claim 1.

In this way, the terminal device may move an icon displayed on a desktop based on a trigger operation performed by a user on the desktop, so that the user can trigger an element in any region of the desktop with one hand.

In a possible implementation, the method further includes: In a moving process of the first interface element, or after the first interface element stops moving, if the terminal device detects that the first operation ends, the terminal device displays the first interface. In this way, the terminal device can cancel displaying of the second interface element when detecting that the first operation ends.

In a possible implementation, the first interface element includes one or more of the following elements: an application icon, a card, or a folder icon.

In a possible implementation, the method further includes: If the first interface element is an application icon, when the terminal device displays the second interface, in response to receiving a first notification message, the terminal device displays the first notification message on the second interface, and displays a first identifier on a second interface element corresponding to the application icon on the second interface, where the first identifier indicates that the first notification message is received. In this way, when the terminal device receives the first notification message, the application icon can be refreshed based on the first notification message.

In a possible implementation, the method further includes: When displaying the second interface, the terminal device receives a first message, where the first message includes an incoming call notification, a video call notification, or a voice call notification; in response to receiving the first message, the terminal device displays an interface corresponding to the first message in full screen, where the interface corresponding to the first message includes at least one control; when the terminal device detects that the first operation ends, the terminal device continues displaying the interface corresponding to the first message; the terminal device receives a second operation performed on the at least one control; and in response to the second operation, the terminal device performs a function corresponding to the at least one control. In this way, when the terminal device receives a message with strong instantaneity, the terminal device can interrupt displaying of the second interface element and display the incoming call message in full screen. If an interface corresponding to the message has a control in a frequently used trigger region of the display, in the method in this embodiment of the application, the terminal device may not respond to triggering of the first operation on the control in the frequently used trigger region, to avoid an accidental touch. In addition, the terminal device may perform a function corresponding to the control when receiving another operation performed by the user on the control on the interface corresponding to the first message.

In a possible implementation, the method further includes: If the first interface element is a card, when the terminal device displays the second interface, in response to receiving a first notification message, the terminal device displays the first notification message on the second interface and refreshes content displayed in a second interface element corresponding to the card on the second interface. In this way, the terminal device can refresh the content displayed in the card based on the notification message, to further improve experience of the user for desktop use.

In a possible implementation, the method further includes: If the first interface element is a folder icon, the terminal device detects that a focus of the first operation moves from the second navigation point to a second interface element corresponding to the folder icon; the terminal device expands and displays the second interface element corresponding to the folder icon; and the terminal device receives a left-right movement of the focus in the second interface element corresponding to the folder, where content displayed in the second interface element corresponding to the folder follows the focus to turn a page. In this way, the terminal device can implement page turning of the folder, to further improve experience of the user for desktop use.

In a possible implementation, the second interface element corresponding to the folder icon includes a target application icon, after the terminal device expands and displays the second interface element corresponding to the folder icon, the method further includes: The terminal device detects that a focus of the first operation moves from the second interface element corresponding to the folder icon to the target application icon; the terminal device highlights the target application icon; and when the terminal device detects that the first operation ends, the terminal device displays an interface corresponding to the target application icon. In this way, the terminal device can open any application in the folder icon, to further improve experience of the user for desktop use.

In a possible implementation, the first operation is an operation performed on the first navigation point, and the method further includes: The terminal device detects that the focus of the first operation moves from the second navigation point to the second interface element; the terminal device highlights the second interface element; and when the terminal device detects that the first operation ends, the terminal device displays an interface corresponding to the second interface element. In this way, the terminal device can open an interface corresponding to any second interface element in a desktop state, to implement convenient opening of a desktop application.

In a possible implementation, the method further includes: The terminal device detects a left-right movement of the focus of the first operation on the second navigation point, and moves content displayed in the preset region with the left-right movement of the focus on the second navigation point. In this way, the terminal device can view all content displayed on the desktop in the preset region, to further improve experience of the user for desktop use.

In this implementation, that the terminal device detects a left-right movement of the focus of the first operation on the second navigation point, and moves content displayed in the preset region with the left-right movement of the focus on the second navigation point includes: The terminal device detects that the focus of the first operation moves in a first direction on the second navigation point, and the terminal device displays a third interface, where a third interface element is displayed in a preset region of the third interface. In this way, the terminal device can view an element displayed on another desktop in the preset region, so that the user can quickly find an application, to further improve experience of the user for desktop use.

In a possible implementation, the method further includes: When displaying the first interface, the terminal device receives a third operation; and in response to the third operation, the terminal device displays a fourth interface, where the fourth interface is a second desktop of the terminal device, and the second desktop includes a fourth interface element, the dock dock bar, a third navigation point, and the status bar, where the third interface element is an interface element obtained after a size of the fourth interface element is reduced, and a state of the third navigation point is different from a state of the first navigation point.

In a possible example, the method further includes: The terminal device detects that the focus of the first operation moves from the second navigation point to the third interface element; the terminal device highlights the third interface element; and when the terminal device detects that the first operation ends, the terminal device displays an interface corresponding to the third interface element. In this way, the terminal device can view elements displayed on all desktops in the preset region, so that the user can quickly find an application, and flexibly open any element on any interface, to further improve experience of the user for desktop use.

In the claimed implementation, the second interface element is displayed in the preset region according to a preset rule; the preset rule is use for filling the second interface element in the preset region; and the preset rule includes: column-based filling, row-based filling, filling based on areas occupied by second interface elements from large to small, or the like. In this way, the terminal device can maximally retain original relative positions between icons based on a column-based filling principle or a row-based filling principle, so that the user can quickly find the second interface element in the preset region based on the original positions of the icons. In addition, the terminal device can alternatively place the card on the upper side of the preset region in a manner of filling based on areas occupied by second interface elements from large to small, so that the user can trigger an icon on the top of the preset region effortlessly, and the user's sense of use is improved.

In a possible example, when there are a plurality of second interface elements, an element whose use frequency is greater than a frequency threshold in the plurality of second interface elements is highlighted in the preset region. In this way, the user can conveniently find, based on the highlighted second interface element, a second interface element that is most likely to be used, to improve the user's sense of use.

In a possible example, when the terminal device detects that the terminal device is held by a left hand, the preset region is located on a left side of the terminal device; or when the terminal device detects that the terminal device is held by a right hand, the preset region is located on a right side of the terminal device. In this way, the terminal device can flexibly adjust the preset region based on the left/right hand operations, so that an adjusted preset region is more convenient for the user to trigger.

In a possible implementation, the first interface further includes a wallpaper, the second interface also includes the wallpaper, and a size of the wallpaper on the first interface is the same as a size of the wallpaper on the second interface.

According to an example, this application provides an interface display apparatus, and the apparatus includes a display unit and a processing unit. The display unit is configured to display a first interface on a display, where the first interface is a first desktop of the terminal device, and the first interface includes a first interface element, a dock dock bar, a first navigation point, and a status bar, and the first interface element is an element located between the first navigation point and the status bar on the first interface. The processing unit is configured to receive a first operation. In response to the first operation, the processing unit is configured to move the first interface element to a lower region of the first interface. After the first interface element stops moving, if the processing unit detects that the first operation is continuously performed on the display, the display unit is further configured to display a second interface on the display, where a second interface element corresponding to the first interface element is displayed in a lower region of the second interface, a displayed position of the dock bar on the second interface is the same as a displayed position of the dock bar on the first interface, a displayed position of the status bar on the second interface is the same as a displayed position of the status bar on the first interface, the second interface further includes a second navigation point, and a quantity of second navigation points is different from a quantity of first navigation points or a state of the second navigation point is different from a state of the first navigation point.

In a possible example, in a moving process of the first interface element, or after the first interface element stops moving, the processing unit is configured to detect that the first operation ends, and the display unit is configured to display the first interface.

In a possible example, a size of the second interface element is smaller than or equal to a size of the first interface element.

In a possible example, the first interface element includes one or more of the following elements: an application icon, a card, a card set, or a folder icon.

In a possible example, if the first interface element is an application icon, when the display unit is configured to display the second interface, in response to receiving a first notification message, the display unit is configured to: display the first notification message on the second interface, and display a first identifier on a second interface element corresponding to the application icon on the second interface, where the first identifier indicates that the first notification message is received.

In a possible example, when the second interface is displayed, the processing unit is configured to receive a first message, where the first message includes an incoming call notification, a video call notification, or a voice call notification. In response to receiving the first message, the display unit is configured to display an interface corresponding to the first message in full screen, where the interface corresponding to the first message includes at least one control. The processing unit is configured to detect that the first operation ends, and the display unit is configured to continue displaying the interface corresponding to the first message. The processing unit is configured to receive a second operation performed on the at least one control. In response to the second operation, the processing unit is configured to perform a function corresponding to the at least one control.

In a possible example, if the first interface element is a card, when the display unit is configured to display the second interface, in response to receiving a first notification message, the display unit is configured to: display the first notification message on the second interface, and refresh content displayed in a second interface element corresponding to the card on the second interface.

In an example, if the first interface element is a card set, the processing unit is configured to receive an up-down movement of a focus in a second interface element corresponding to the card set, where content displayed in the second interface element corresponding to the card set follows the focus to turn a page; or when detecting that displayed duration of a second interface element corresponding to the card set exceeds a time threshold, the processing unit is configured to perform page turning on the second interface element corresponding to the card set.

In a possible example, if the first interface element is a folder icon, the processing unit is configured to detect that a focus of the first operation moves from the second navigation point to a second interface element corresponding to the folder icon; the display unit is configured to expand and display the second interface element corresponding to the folder icon; and the processing unit is configured to receive a left-right movement of the focus in the second interface element corresponding to the folder, where content displayed in the second interface element corresponding to the folder follows the focus to turn a page.

In a possible example, the second interface element corresponding to the folder icon includes a target application icon, after the processing unit is configured to expand and display the second interface element corresponding to the folder icon, the method further includes: The processing unit is configured to detect that a focus of the first operation moves from the second interface element corresponding to the folder icon to the target application icon; the display unit is configured to highlight the target application icon; and the processing unit is configured to detect that the first operation ends, and the display unit is configured to display an interface corresponding to the target application icon.

In a possible example, the first operation is an operation performed on the first navigation point, and the processing unit is configured to detect that the focus of the first operation moves from the second navigation point to the second interface element.

The display unit is configured to highlight the second interface element. The processing unit is configured to detect that the first operation ends, and the display unit is configured to display an interface corresponding to the second interface element.

In an example, the second interface element is displayed in a preset region, and the preset region is located above the second navigation point.

In a possible example, the processing unit is configured to: detect a left-right movement of the focus of the first operation on the second navigation point, and move content displayed in the preset region with the left-right movement of the focus on the second navigation point.

In a possible example, that the processing unit is configured to: detect a left-right movement of the focus of the first operation on the second navigation point, and move content displayed in the preset region with the left-right movement of the focus on the second navigation point includes: The processing unit is configured to detect that the focus of the first operation moves in a first direction on the second navigation point, and the display unit is configured to display a third interface, where a third interface element is displayed in a preset region of the third interface.

In a possible example, the display unit is configured to: when displaying the first interface, receive a third operation. In response to the third operation, the display unit is configured to display a fourth interface, where the fourth interface is a second desktop of the terminal device, and the second desktop includes a fourth interface element, the dock dock bar, a third navigation point, and the status bar, where The third interface element is an interface element obtained after a size of the fourth interface element is reduced, and a state of the third navigation point is different from a state of the first navigation point.

In a possible example, the processing unit is configured to detect that the focus of the first operation moves from the second navigation point to the third interface element. The display unit is configured to highlight the third interface element. The processing unit is configured to detect that the first operation ends, and the display unit is configured to display an interface corresponding to the third interface element.

In an example, the second interface element is displayed in the preset region according to a preset rule; the preset rule is use for filling the second interface element in the preset region; and the preset rule includes: column-based filling, row-based filling, filling based on areas occupied by second interface elements from large to small, or the like.

In a possible example, when there are a plurality of second interface elements, an element whose use frequency is greater than a frequency threshold in the plurality of second interface elements is highlighted in the preset region.

In a possible example, when the terminal device detects that the terminal device is held by a left hand, the preset region is located on a left side of the terminal device; or when the terminal device detects that the terminal device is held by a right hand, the preset region is located on a right side of the terminal device.

In a possible example, the first interface further includes a wallpaper, the second interface also includes the wallpaper, and a size of the wallpaper on the first interface is the same as a size of the wallpaper on the second interface.

According to a second aspect, an embodiment of this application provides a terminal device, including a processor and a memory. The memory is configured to store code instructions. The processor is configured to run the code instructions, so that an electronic device performs the method according to the first aspect or any implementation of the first aspect.

According to a third aspect, an embodiment of this application provides a computer-readable storage medium. The computer-readable storage medium stores instructions. When the instructions are executed, a computer is enabled to perform the method according to the first aspect or any implementation of the first aspect.

According to an example, a computer program product is provided, including a computer program. When the computer program is run, a computer is enabled to perform the method according to the first aspect or any implementation of the first aspect.

It should be understood that the second aspect to the third aspect of this application correspond to the technical solution of the first aspect of this application, and the beneficial effects obtained by each aspect and the corresponding feasible implementations are similar. Details are not described herein again.

### BRIEF DESCRIPTION OF DRAWINGS

FIG. 1 is a schematic diagram of a scenario according to an embodiment of this application;
FIG. 2 is a schematic diagram of a hardware structure of a terminal device according to an embodiment of the present application;
FIG. 3 is a schematic diagram of a software structure of a terminal device according to an embodiment of the present application;
FIG. 4A to FIG. 4C are a schematic diagram of a desktop according to an embodiment of this application;
FIG. 5A to FIG. 5C are a schematic interface diagram of moving a desktop icon according to an embodiment of this application;
FIG. 6A and FIG. 6B are a schematic interface diagram of a preset region according to an embodiment of this application;
FIG. 7A and FIG. 7B are a schematic interface diagram of another preset region according to an embodiment of this application;
FIG. 8A to FIG. 8C are a schematic diagram of a startup interface according to an embodiment of this application;
FIG. 9A to FIG. 9C are a schematic interface diagram of column-based filling according to an embodiment of this application;
FIG. 10A to FIG. 10C are a schematic interface diagram of row-based filling according to an embodiment of this application;
FIG. 11A and FIG. 11B are a schematic interface diagram of full-regrouping-based filling according to an embodiment of this application;
FIG. 12A to FIG. 12C are a schematic interface diagram of selecting different applications according to an embodiment of this application;
FIG. 13A to FIG. 13D are a schematic interface diagram of sliding out a preset region according to an embodiment of this application;
FIG. 14A to FIG. 14D are a schematic interface diagram of viewing another interface according to an embodiment of this application;
FIG. 15A to FIG. 15E are another schematic interface diagram of viewing another interface according to an embodiment of this application;
FIG. 16A to FIG. 16C are a schematic interface diagram of viewing a frequently used application according to an embodiment of this application;
FIG. 17A to FIG. 17C are a schematic interface diagram of triggering a dock bar according to an embodiment of this application;
FIG. 18A to FIG. 18C are a schematic interface diagram of receiving a new message according to an embodiment of this application;
FIG. 19A and FIG. 19B are a schematic interface diagram of turning a page of a card according to an embodiment of this application;
FIG. 20A to FIG. 20D are a schematic interface diagram of turning a page of a folder according to an embodiment of this application;
FIG. 21A to FIG. 21E are a schematic interface diagram of receiving an incoming call message according to an embodiment of this application;
FIG. 22A and FIG. 22B are another schematic interface diagram of scaling down a desktop according to an embodiment of this application;
FIG. 23 is a schematic diagram of a structure of an interface display apparatus according to an embodiment of this application; and
FIG. 24 is a schematic diagram of a hardware structure of another terminal device according to an embodiment of the present application.

### DESCRIPTION OF EMBODIMENTS

For ease of describing the technical solutions in embodiments of this application clearly, in embodiments of this application, words such as "first" and "second" are used to distinguish same or similar items with a basically same function and role. For example, a first value and a second value are merely used to distinguish between different values, and are not intended to limit a sequence thereof. A person skilled in the art may understand that the words such as "first" and "second" do not limit a quantity and an execution sequence, and the words such as "first" and "second" are not limited to be necessarily different.

It should be noted that, in this application, words such as "in an example" or "for example" are used to represent giving an example, an illustration, or a description. Any embodiment or design scheme described as "in an example" or "for example" in this application should not be explained as being more preferred or having more advantages than another embodiment or design scheme. In particular, the words such as "in an example" or "for example" as used herein are intended to present the related concept in a specific manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. A character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

When an icon of an application or a card is located at a lower part of a desktop, a terminal device can select any application or card on the desktop based on a single-hand operation of a user. However, when the application (or card) is located at the top of the desktop of the terminal device, it is difficult for the user to select the application or the card through the single-hand operation. For example, when the user holds the terminal device by using the left hand and triggers an application (or card) located at the top of the desktop or the upper right corner of the desktop by using the left thumb, because the terminal device is large or long, it is difficult for the user to trigger the application (or card) located at the top of the desktop with one hand. Alternatively, the user may first perform an operation to enter a single-hand mode. In the single-hand mode, an upper part of the desktop of the mobile phone moves to an interface of a lower half screen of the mobile phone for display. The user may perform an operation on the lower half screen of the mobile phone, to open the application or the card located at the top of the desktop, but the operation is complicated. In addition, only some icons of the desktop are displayed on a desktop in the single-hand mode. This is not conducive to a user operation.

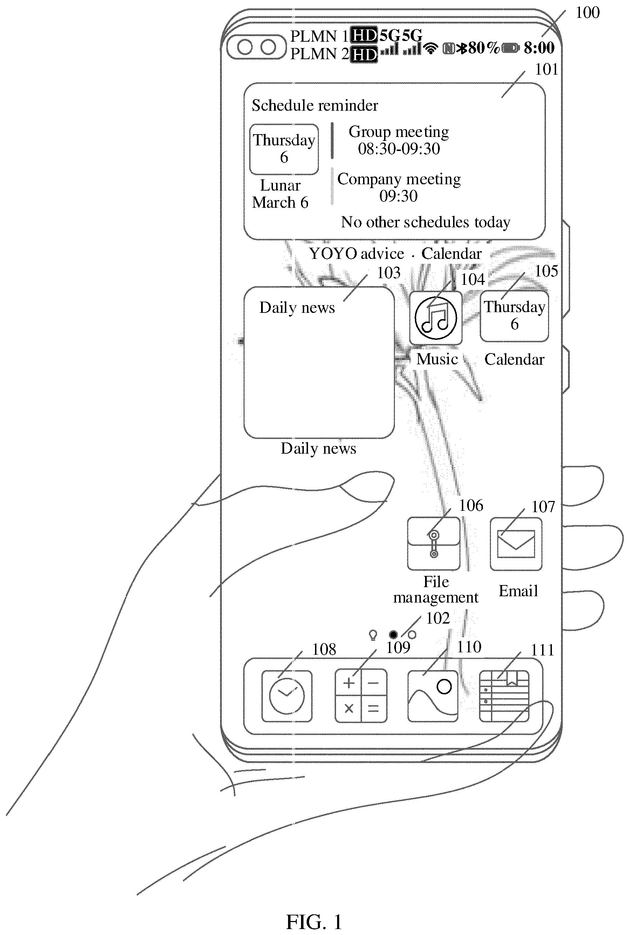

For example, FIG. 1 is a schematic diagram of a scenario according to an embodiment of this application. In embodiments corresponding to FIG. 1, an example in which the terminal device is a mobile phone is used for description, and this example does not constitute a limitation on embodiments of this application.

An interface is shown in FIG. 1, the interface may be any interface on the desktop of the terminal device, and the interface may include: a wallpaper, a status bar 100 located at the top of the terminal device, a system advice card 101, a daily news card 103, a music application icon 104, a calendar application icon 105, a file management application icon 106, an email application icon 107, and a navigation point 102. A dock (dock) bar of the interface may include: a clock application icon 108, a calculator application icon 109, a gallery application icon 110, a notepad application icon 111, and the like. The system advice card 101 may include a calendar card for a schedule reminder, and may also include other cards such as a weather card.

The navigation point 102 may indicate a current interface, the navigation point 102 may include one or more points, and each point may indicate a desktop of the terminal. As shown in the example of FIG. 1, the navigation point 102 may include three points, and any one of the three points may indicate an interface that may be displayed on the desktop of the terminal device. The clock application icon 108, the calculator application icon 109, the gallery application icon 110, and the notepad application icon 111 are application icons in the dock bar at the bottom of the desktop. As shown in FIG. 1, the calendar card in the system advice card 101 may include: a calendar application icon, information indicating a lunar calendar date, a message for a group meeting from 8:30 to 9:30, a message for a company meeting from 9:30, text information indicating that there are no other schedules for today, and the like.

It may be understood that when the user holds the terminal device by using the left hand, and the terminal device displays the interface shown in FIG. 1, the user may trigger an icon on the interface shown in FIG. 1 by using the left thumb. However, when the user needs to trigger the system advice card 101 to view a schedule for today, because the system advice card 101 is located at the top of the desktop, it is difficult for the user to trigger a card or an application icon located in a top region of the desktop. In particular, in a scenario in which the hand of the user is small or the terminal device is large in size, it is more difficult for the user to trigger the card or the application icon located in the top region of the desktop with one hand.

In a possible implementation, when the terminal device includes a plurality of interfaces, and any interface includes a plurality of applications, to find an application on a specific interface, the user needs to select the required interface through a plurality of sliding and lifting page turning operations, and select the required application on the interface through an operation like tapping or touching and pressing. However, in the scenario in which the terminal device includes a plurality of interfaces, steps for selecting the application on the specific interface are cumbersome.

In view of this, embodiments of this application provide an interface display method. A terminal device displays a first interface, where the first interface includes a navigation point and at least one icon. When the terminal device receives a first operation performed on a region in which the navigation point is located, the terminal device displays a second interface in response to the first operation. On the second interface, the at least one icon on the first interface is displayed in a preset region of the second interface, and the preset region is located in a lower region of a screen of the terminal device. In this way, it can be avoided that a user is difficult to trigger an icon when the icon is located at the top of the screen of the terminal device, so that the user can conveniently trigger an icon located in a top region of the screen of the terminal device.

In a possible implementation, the preset region of the second interface further includes at least one scaled-down icon. When there are many application icons, desktop cards, widgets, and the like on the first interface, the terminal device may scale down and display the icons, the desktop cards, the widgets, and the like in the preset region. In this way, it can also be avoided that the user is difficult to trigger an icon when the icon is located at the top of the screen of the terminal device, so that the user can conveniently trigger any scaled-down icon in the preset region.

In a possible implementation, the preset region is located on an upper side of the navigation point, so that the user can trigger the at least one scaled-down icon with one hand. For example, when the terminal device receives an operation performed on the at least one scaled-down icon, the terminal device displays an interface corresponding to the at least one icon.

The preset region may alternatively be located in a position other than the upper side of the navigation point, for example, in the middle of the display of the terminal device, a left region of the lower region of the display, or a right region of the lower region of the display. Alternatively, a displayed position of the preset region may be related to a state in which the user holds the terminal device. For example, when the user holds the terminal device by using the left hand, the preset region may be at a left position in the lower region of the display of the terminal device, or when the user holds the terminal device by using the right hand, the preset region may be at a right position in the lower region of the display of the terminal device. A specific position of the preset region is not limited in embodiments of this application.

The icon may be an application icon, a card icon, a widget icon, and/or an icon corresponding to a folder in embodiments of the application, and a specific form of the icon is not limited in embodiments of the application.

It may be understood that, the terminal device may also be referred to as a terminal (terminal), user equipment (user equipment, UE), a mobile station (mobile station, MS), a mobile terminal (mobile terminal, MT), or the like. The terminal device may be a mobile phone (mobile phone) having a touchscreen, a smart TV, a wearable device, a tablet computer (Pad), a computer having a wireless transmission and receiving function, a virtual reality (Virtual Reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

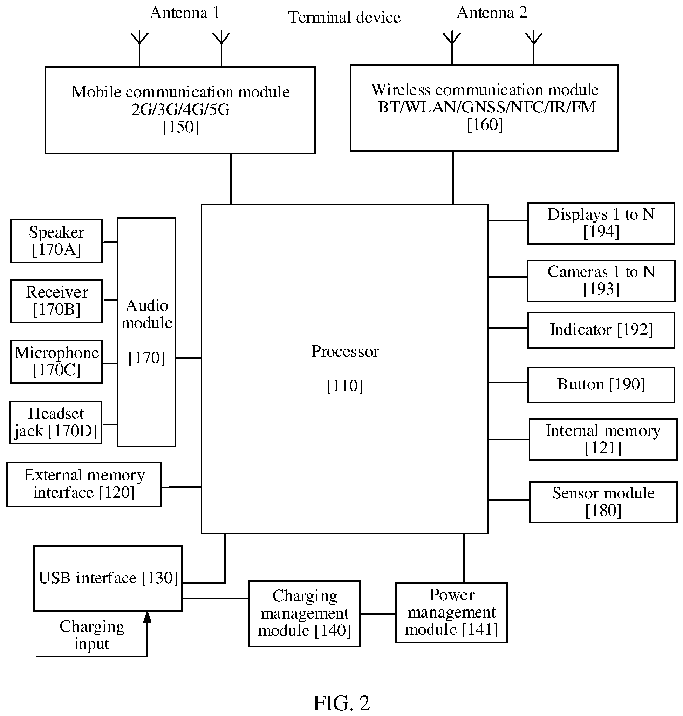

Therefore, to better understand embodiments of this application, the following describes a structure of the terminal device in embodiments of this application. For example, FIG. 2 is a schematic diagram of a structure of the terminal device according to an embodiment of the present application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a button 190, an indicator 192, a camera 193, a display 194, and the like.

It may be understood that an example structure in this embodiment of this application does not constitute a specific limitation on the terminal device. In some other embodiments of this application, the terminal device may include more or fewer components than those shown in the figure, or some components may be combined, or some components may be split, or there is a different component arrangement. The components shown in the figure may be implemented by hardware, software, or a combination of software and hardware.

The processor 110 may include one or more processing units. Different processing units may be separate devices, or may be integrated into one or more processors. A memory may be further disposed in the processor 110, and is configured to store instructions and data.

The USB interface 130 is an interface that complies with the USB standard specification, and may be specifically a Mini USB interface, a Micro USB interface, a USB Type C interface, and the like. The USB interface 130 may be configured to connect to a charger to charge the terminal device, or may be used for data transmission between the terminal device and a peripheral device, The USB interface may also be configured to connect to a headset to play audio through the headset. The interface may alternatively be configured to connect to another terminal device, for example, an AR device.

The charging management module 140 is configured to receive a charging input from the charger. The charger may be a wireless charger or a wired charger. The power management module 141 is configured to connect to the charging management module 140 and the processor 110.

A wireless communication function of the terminal device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. An antenna in the terminal device may be configured to cover a single communication frequency band or a plurality of communication frequency bands. Different antennas may further be multiplexed to improve utilization of the antennas.

The mobile communication module 150 may provide a solution to wireless communication such 2G/3G/4G/5G applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and send the electromagnetic wave to the modem processor for demodulation.

The wireless communication module 160 may provide a solution for wireless communication including wireless local area networks (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), and the like to be applied to the terminal device.

The terminal device implements a display function by using the GPU, the display 194, the application processor, and the like. The GPU is a microprocessor for image processing and connects the display 194 and the application processor. The GPU is configured to: perform mathematical and geometric calculations, and render graphics.

The display 194 is configured to display an image, a video, and the like. The display 194 includes a display panel. In some embodiments, the terminal device may include one or N displays 194. N is a positive integer greater than 1.

In a possible implementation, when the terminal device is a device having touch function, the display 194 and a touchscreen may be combined together. When the user triggers a corresponding position of the display 194, it is equivalent to that the user triggers a corresponding position of the touchscreen.

The triggering may include a tap operation, a touch and press operation, and the like. The tap operation may be an operation of pressing at a corresponding position on the display 194 and lifting within a preset time threshold. The touch and press operation may be an operation of pressing at a corresponding position of the display 194 and lifting after continuously pressing for more than a preset time threshold. It may be understood that both the tap operation and the touch and press operation described in embodiments of this application can be applied to a terminal device in which the display 194 is combined with the touchscreen. Details are not described again in the following.

In a possible implementation, the display 194 and the touchscreen may not be combined together. In this case, the tap operation and the touch and press operation in embodiments of this application may be replaced by other operations and the like. This is not limited in embodiments of this application.

The terminal device may implement a photographing function by using the ISP, the camera 193, the video codec, the GPU, the display 194, the application processor, and the like.

The camera 193 is configured to capture a static image or a video. In some embodiments, the terminal device may include one or N cameras 193. N is a positive integer greater than 1.

The external memory interface 120 may be configured to connect to an external storage card, for example, a Micro SD card, to extend a storage capability of the terminal device. The external storage card communicates with the processor 110 through the external memory interface 120, to implement a data storage function. For example, files such as music and a video are stored into the external storage card.

The internal memory 121 may be configured to store computer-executable program code, where the executable program code includes instructions. The internal memory 121 may include a program storage region and a data storage region. The internal memory 121 is configured to store executable program code corresponding to the interface display method described in embodiments of this application, and then the processor 110 invokes and executes the executable program code.

The terminal device may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The speaker 170A, also referred to as "horn", is configured to convert an electrical audio signal into a sound signal. Music can be listened to or a hands-free call can be answered by using the speaker 170A in the terminal device. The receiver 170B, also referred to as "handset", is configured to convert an electrical audio signal into a sound signal. When a call is answered or audio information is listened to by using the terminal device, the receiver 170B may be put close to a human ear to listen to a voice. The headset jack 170D is configured to be connected to a wired headset.

The microphone 170C, also referred to as "mike" or "mic", is configured to convert a sound signal into an electrical signal. In an embodiment of this application, the terminal device may receive, based on the microphone 170C, a sound signal for waking up the terminal device, and convert the sound signal into an electrical signal that can be subsequently processed, for example, voiceprint data described in embodiments of this application. The terminal device may have at least one microphone 170C.

The sensor module 180 may include one or more of the following sensors: for example, a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor (not shown in FIG. 2), and the like.

The button 190 includes a power button, a volume button, and the like. The button 190 may be a mechanical button, or a touch-type button. The terminal device may receive a button input, generate a button signal input related to a user setting and function control of the terminal device. The indicator 192 may be an indicator light that may be configured to indicate a charging state and a power change, or may be configured to indicate a message, a missed call, a notification, and the like.

A software system of the terminal device may use a layered architecture, an event-driven architecture, a micro kernel architecture, a micro service architecture, or a cloud architecture like. Details are not described herein again.

In this embodiment of this application, an Android (Android) system with a layered architecture is used as an example to describe a software structure of the terminal device.

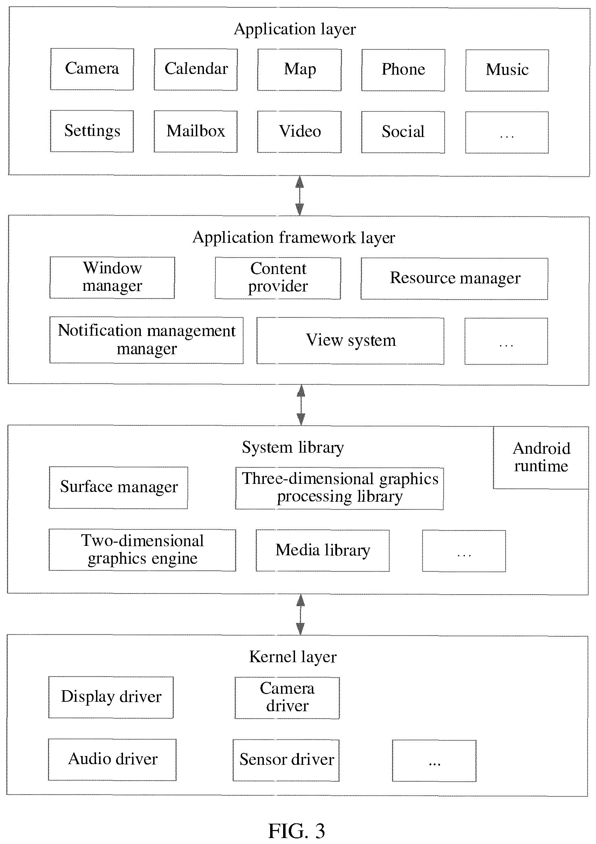

For example, FIG. 3 is a schematic diagram of the software structure of the terminal device according to an embodiment of the present application. As shown in FIG. 3, the layered architecture divides software into several layers, and each layer has a clear role and task. The layers communicate with each other through a software interface. In some embodiments, the Android system may be divided into four layers: an application layer, an application framework layer, an Android runtime (Android runtime) and system library, and a kernel layer from top to bottom.

The application layer may include a series of application packages. As shown in FIG. 3, the application package may include applications such as Camera, Calendar, Phone, Map, Phone, Music, Settings, Email, Video, and Social.

The application framework layer provides an application programming interface (application programming interface, API) and a programming framework for applications at the application layer. The application framework layer includes some predefined functions.

As shown in FIG. 3, the application framework layer may include a window manager, a content provider, a resource manager, a view system, a notification manager, and the like.

The window manager is configured to manage a window application. The window manager may obtain a size of the display, determine whether there is a status bar, lock the screen, touch the screen, drag the screen, take a screenshot, and the like.

In this embodiment of this application, the window manager is configured to determine a display manner of a first interface element on the desktop based on an operation of touching the screen by the user. For example, the first interface element is moved to a lower region of the screen or the first interface element is scaled down and moved to the lower region of the screen.

The content provider is configured to store and obtain data and enable the data to be accessible to an application. The data may include a video, an image, an audio, made and answered calls, a browse history, a bookmark, an address book, and the like.

The view system includes visual controls such as a control for displaying a text and a control for displaying an image. The view system may be configured to construct an application. A display interface may include one or more views. For example, a display interface including a messaging notification icon may include a view for displaying a text and a view for displaying an image.

The resource manager provides various resources such as a localized character string, an icon, an image, a layout file, and a video file for an application.

The notification manager enables an application to display notification information in the status bar that may be used to convey a message of a notification type, where the message may disappear automatically after a short stay without user interaction. For example, the notification manager is configured to provide a notification of download completion, a message notification, and the like. The notification manager may alternatively be a notification that appears on a top status bar of the system in a form of a graph or a scroll bar text, for example, a notification of an application running on the background, or may be a notification that appears on the screen in a form of a dialog window. For example, text information is prompted for in the status bar, an announcement is produced, the terminal device vibrates, or the indicator light blinks.

The Android runtime includes a core library and a virtual machine. The Android runtime is responsible for scheduling and managing the Android system.

The core library includes two parts: One part is a performance function that the Java language needs to invoke, and the other part is a core library of Android.

The application layer and the application framework layer are run in the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers to a plurality of applications.

The media library supports playback and recording in a plurality of common audio and video formats, and also support static image files, and the like. The media library may support a plurality of audio and video encoding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display drive, a camera drive, an audio drive, and a sensor drive.

The following describes the technical solutions of this application and how to resolve the foregoing technical problems according to the technical solutions of this application in detail by using specific embodiments. The following several specific embodiments may be independently implemented, and may also be combined with each other, and the same or similar concepts or processes may not be described repeatedly in some embodiments.

It may be understood that before the interface display method provided in embodiments of this application is introduced, content that can be displayed on the desktop of the terminal device is introduced.

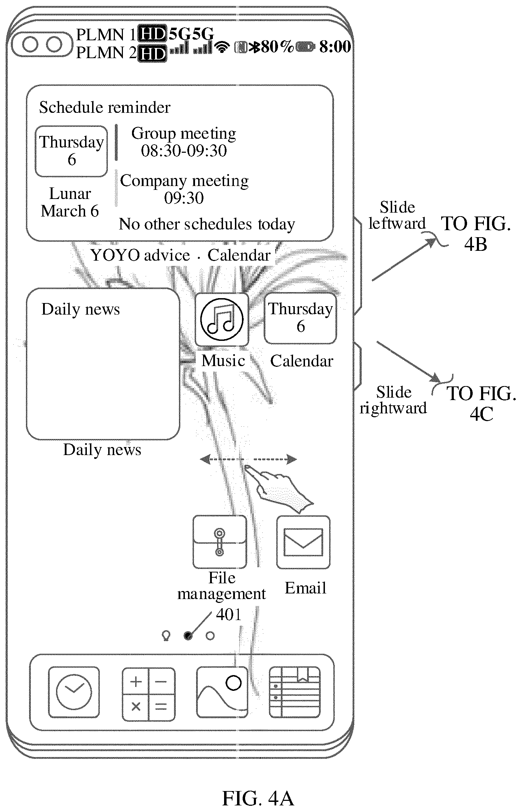

For example, FIG. 4A to FIG. 4C are a schematic diagram of a desktop according to an embodiment of this application.

When the terminal device opens the desktop, the terminal device can display a main interface of the desktop by default, for example, an interface shown in FIG. 4A. A navigation point 401 on the interface shown in FIG. 4A may indicate that a home screen or a first screen of the desktop is currently displayed, and content displayed on the interface shown in FIG. 4A may be similar to that on the interface shown in FIG. 1. Details are not described herein again. Further, the terminal device may display different interfaces based on a sliding operation performed by the user on the interface shown in FIG. 4A.

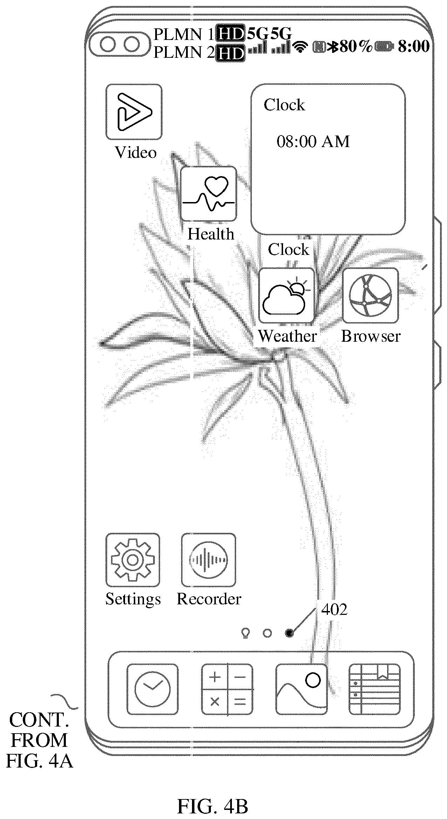

In an implementation, on the interface shown in FIG. 4A, when the terminal device receives an operation of sliding leftward performed by the user, the terminal device may display an interface shown in FIG. 4B. On the interface shown in FIG. 4B, a navigation point 402 on the interface may indicate that a second screen of the desktop is currently displayed, and the interface may include: a video application icon, a health application icon, a weather application icon, a clock card, a browser application icon, a settings application icon, a recorder application icon, a dock bar, and the like. Content displayed in the dock bar is consistent with that in the dock bar in FIG. 1. Details are not described herein again.

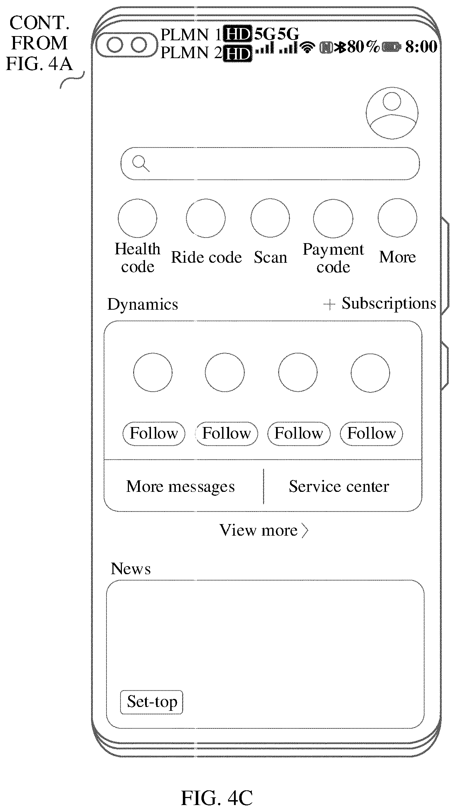

In another implementation, on the interface shown in FIG. 4A, when the terminal device receives an operation of sliding rightward performed by the user, the terminal device may display an interface shown in FIG. 4C. An interface shown in FIG. 4C may be a leftmost home screen of the desktop, and the interface may include: an account number icon, a text box for searching content, a health code icon, a ride code icon, a scan icon, a payment code icon, an icon for opening more functions, a dynamic of the terminal device, a control for subscribing to another dynamic of the terminal device, a control for viewing more messages, a control for opening a service center, a control for viewing more content in the dynamic, a news message, a control for setting a top news message, and the like The leftmost home screen may not display the navigation point.

It may be understood that, that the leftmost home screen does not display the navigation point may be understood as that the terminal device does not implement the interface display method described in embodiments of this application on the leftmost home screen, or that the terminal device may implement the method described in embodiments of this application when the display interface is the desktop, and the terminal device does not implement the method described in embodiments of this application on another interface, for example, the leftmost home screen or an application interface.

It may be understood that specific content displayed on the first screen, the second screen, and the leftmost home screen is not limited in embodiments of this application. Wallpapers displayed on the first screen and the second screen may be consistent.

In a possible implementation, the desktop of the terminal device may also display more desktop interfaces in addition to the first screen, the second screen, and the leftmost home screen, and the terminal device may view the more desktop interfaces based on an operation of sliding leftward or rightward performed by the user. This is not limited in embodiments of this application.

Based on embodiments corresponding to FIG. 4A to FIG. 4C, the terminal device may move, based on a trigger operation performed by the user on the navigation point, all icons displayed on the desktop except the dock bar, the navigation point, and the status bar to a lower region of the desktop for display. Alternatively, the icons displayed on the desktop except the dock bar, the navigation point, and the status bar are scaled down and moved to the lower region of the desktop for display. The icons may include an application icon, a folder icon, a card (widget), and the like.

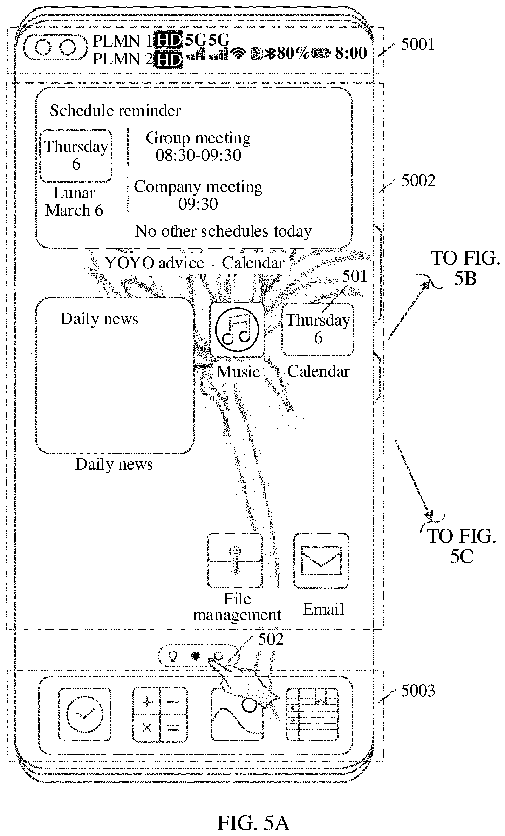

For example, FIG. 5A to FIG. 5C are a schematic interface diagram of moving a desktop icon according to an embodiment of this application.

In an implementation, the terminal device may move, based on a trigger operation performed by the user on the navigation point, all icons displayed on the desktop except the dock bar, the navigation point, and the status bar to a lower region of the desktop for display.

An interface shown in FIG. 5A may include a plurality of regions, for example, a region 5001 in which the status bar at the top of the mobile phone is located, a region 5002 in which the application icon on the desktop is located (or referred to as a target region 5002), a region 5003 in which the dock bar is located, and a region 502 in which the navigation point is located.

It may be understood that icons described in embodiments of this application other than the dock bar, the navigation point, and the status bar may be icons displayed in the target region 5002. The icons displayed in the target region may also be referred to as first interface elements.

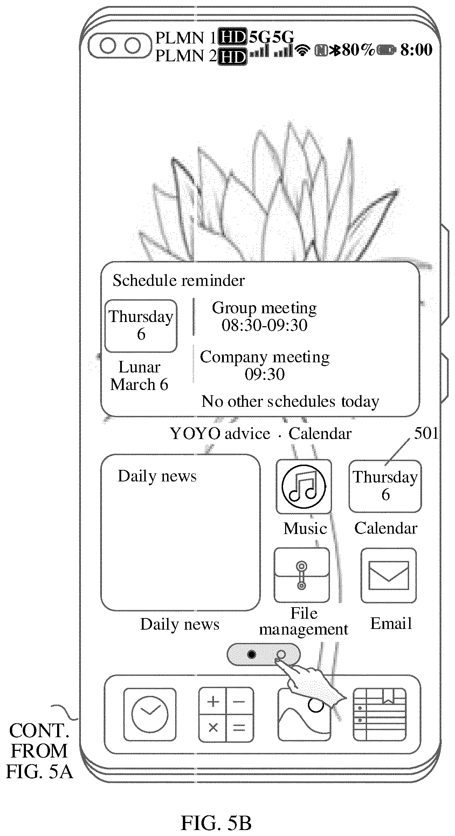

When the terminal device displays the main interface of the desktop as shown in FIG. 5A, and the terminal device receives a trigger operation performed by the user on the region 502 in which the navigation point is located, the terminal device may move the first interface elements in the target region 5002, and display an interface shown in FIG. 5B, so that the user can flexibly trigger an element located in the lower region of the terminal device on the interface shown in FIG. 5B. Icons other than the navigation point, the status bar, and the dock bar that are displayed on the interface shown in FIG. 5B may be second interface elements, and sizes of the second interface elements may be the same as sizes of the first interface elements. The trigger operation performed on the region 502 in which the navigation point is located may be a touch and press operation, a double-tap operation, a tap operation, a sliding operation, or the like.

It may be understood that the terminal device may move down the first interface elements on the desktop based on a column-based filling principle (for example, column-based downward filling), to fill a blank region on the interface. The blank region may be understood as a region corresponding to at least one application icon (card, widget, or the like). In addition, the blank region cannot be understood as a region including gaps between a plurality of icons.

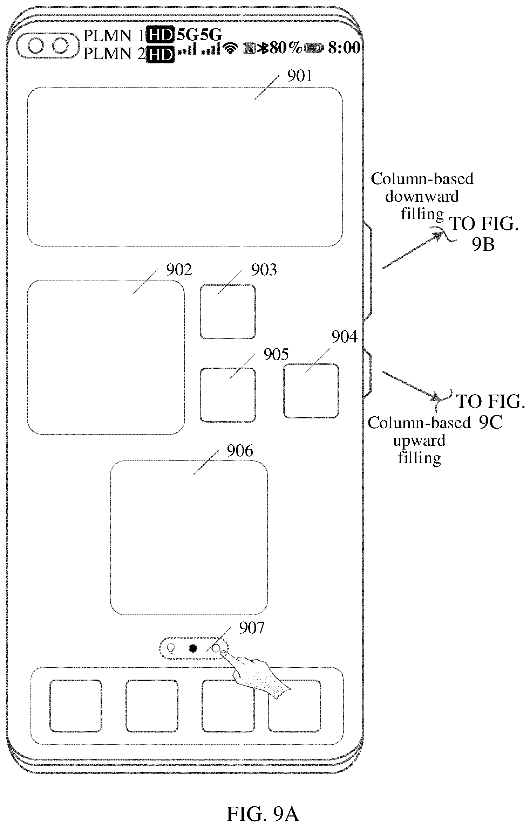

The column-based filling may be understood as moving an icon in a direction of a column of the terminal device to fill a blank region in the column in which the icon is located. The column-based downward filling may be understood as moving an icon downward in a column of the terminal device to fill a blank region in the column in which the icon is located. For a specific implementation process of the column-based filling principle, refer to descriptions in embodiments corresponding to FIG. 9A to FIG. 9C.

It may be understood that when there is a blank region in a column in which any icon in the terminal device is located, the icon may be moved based on the column-based filling principle. When there is no blank region in a column in which any icon in the terminal device is located, if the icon is moved based on the column-based filling principle, a relative position relationship between a position of the icon and other elements on the interface may remain unchanged.

On the interface shown in FIG. 5A, the region 502 in which the navigation point is located may be a region in which the dotted line box above the dock bar shown in FIG. 5A is located, where the dotted line box may not be displayed on the interface and only indicates the region in which the navigation point is located. The region 502 in which the navigation point is located may include three navigation points, such as a navigation point corresponding to the leftmost home screen, a navigation point corresponding to the first screen, and a navigation point corresponding to the second screen. In addition, the navigation point that corresponds to the first screen and that is the middle point in the three navigation points is in a selected state, and the like. The navigation point corresponding to the leftmost home screen may not be displayed. In other words, the terminal device may display the navigation points corresponding to the first screen and the second screen. It may be understood that in embodiments of this application, there is no limitation on a quantity of navigation points included in the region 502 in which the navigation point is located.

It may be understood that in the process of moving the first interface element on the interface shown in FIG. 5A downward to display the interface shown in FIG. 5B, a position and a size of a wallpaper may not change. In other words, a wallpaper on the interface shown in FIG. 5A is consistent with a wallpaper on the interface shown in FIG. 5B.

It may be understood that in the process of moving the first interface element on the interface shown in FIG. 5A downward to display the interface shown in FIG. 5B, a position of the status bar and a position of the dock bar do not change.

In another implementation, the terminal device may display a scaled-down first interface element in the lower region of the terminal device based on a trigger operation performed by the user on the navigation point.

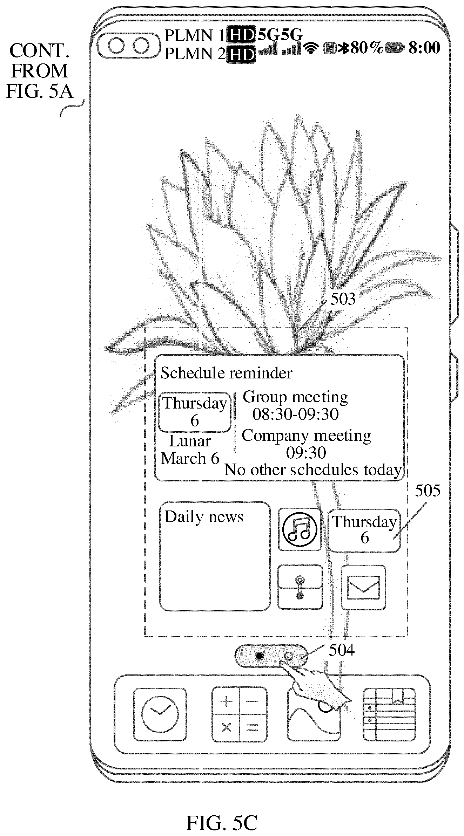

When the terminal device displays the main interface of the desktop as shown in FIG. 5A, and the terminal device receives a trigger operation performed by the user on the region 502 in which the navigation point is located, the terminal device may move the first interface elements in the target region 5002, scale down and display the first interface elements in the preset region 503, and display an interface shown in FIG. 5C.

It may be understood that the trigger operation may be a tap operation, a touch and press operation, a double-tap operation, a voice operation, or the like. This is not limited in embodiments of this application.

The interface shown in FIG. 5C includes a preset region 503, a region 504 in which the navigation point is located, the status bar, and applications in the dock bar. The preset region 503 may be a region in which the dotted line box shown in FIG. 5C is located. The preset region 503 may include a second interface element. The second interface element may be a scaled-down first interface element, an area occupied by the second interface element may be 1/2 or 3/4 of an area occupied by the first interface element, and the area occupied by the second interface element meets a minimum area that can be triggered by the user. For example, the preset region 503 may include: a scaled-down system advice card, a scaled-down daily news card, a scaled-down music application icon, a scaled-down calendar application icon 505, a scaled-down file management application icon, a scaled-down email application icon, and the like.

In a possible implementation, different types of first interface elements may be scaled down in different ratios. For example, when the first interface element is an application icon, the area occupied by the second interface element may be 3/4 of the area occupied by the first interface element; when the first interface element is a 2*2 card, the area occupied by the second interface element may be 1/2 of the area occupied by the first interface element; when the first interface element is a 2*4 card, the area occupied by the second interface element may be 1/3 of the area occupied by the first interface element; or the like. A larger area occupied by the first interface element indicates a smaller ratio of an area occupied by the second interface element to the area occupied by the first interface element.

Details are as follows: An arrangement of icons in the preset region 503 may be as follows: Based on a relative position relationship of the icons in the target region, the icons are displayed in the preset region 503 in an arrangement manner of column-based downward filling. For a specific manner of column-based downward filling, refer to the foregoing descriptions. Details are not be described.

As shown in FIG. 5C, the preset region 503 may be located in a region above the region 504 in which the navigation point is located. Alternatively, the preset region 504 may be displayed above the region 504 in which the navigation point is located and in the middle of the screen. In a possible implementation, the preset region 504 may alternatively be displayed above the region 504 in which the navigation point is located and on the left (or right) side of the screen. For example, the terminal device may learn a state in which the user uses the terminal device by using the left hand or the right hand, and display the preset region 504 on the left side of the screen when detecting that the user holds the terminal device by using the left hand, or display the preset region 504 on the right side of the screen when detecting that the terminal device is held by using the right hand, so that the icon in the preset region is more convenient for the user to trigger with one hand.

The preset region 503 may be used to display the second interface element. A size of the preset region 503 may be related to a quantity of second interface elements and a size of the second interface element.

It may be understood that an area occupied by the preset region may be 1/6 or 1/4 of an area occupied by the screen of the terminal device. A maximum value of the area occupied by the preset region may be, when first interface elements fully fill the target region, an area obtained after all the first interface elements in the target region are scaled down.

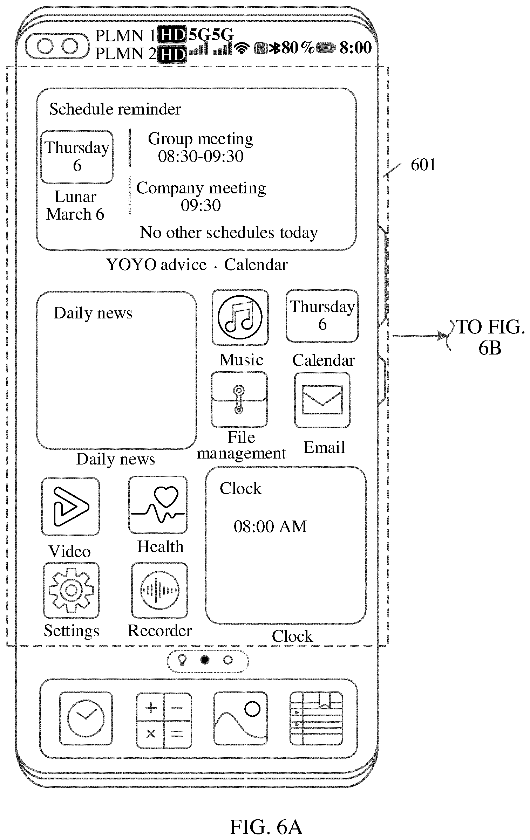

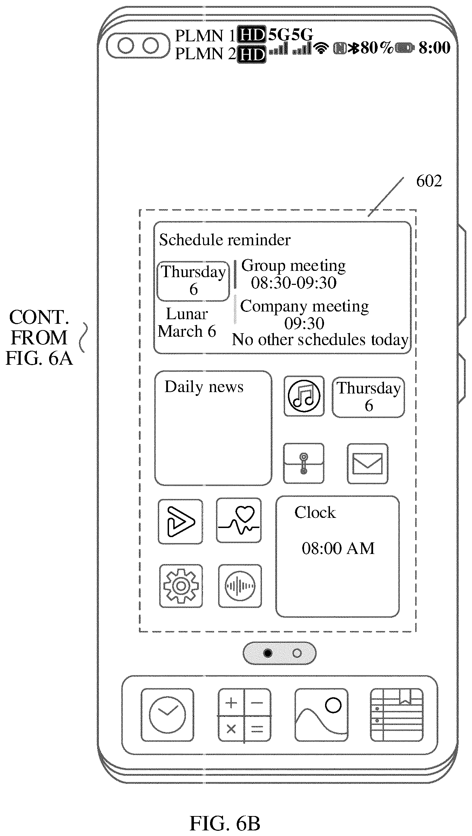

For example, FIG. 6A and FIG. 6B are a schematic interface diagram of a preset region according to an embodiment of this application. On an interface shown in FIG. 6A, the first screen of the terminal device may display a plurality of first interface elements, and the plurality of first interface elements fully fill a target region 601 of the terminal device.

When the terminal device receives a trigger operation performed by the user on a region in which the navigation point is located on the interface shown in FIG. 6A, the terminal device may display an interface shown in FIG. 6B. On the interface shown in FIG. 6B, a plurality of second interface elements may be displayed in a preset region 602, and the plurality of second interface elements fully fill the preset region 602. It may be understood that an area occupied by the preset region 602 on the interface shown in FIG. 6B may be understood as the maximum value of the area occupied by the preset region.

It may be understood that a quantity of first interface elements that fully fill the target region and a size of an area occupied by any one of the first interface elements are not limited in embodiments of this application.

A minimum value of the area occupied by the preset region may be, when there is a first interface element with a smallest occupied area in the target region, an area obtained after the first interface element in the target region is scaled down. The first interface element with the smallest occupied area may be an application icon.

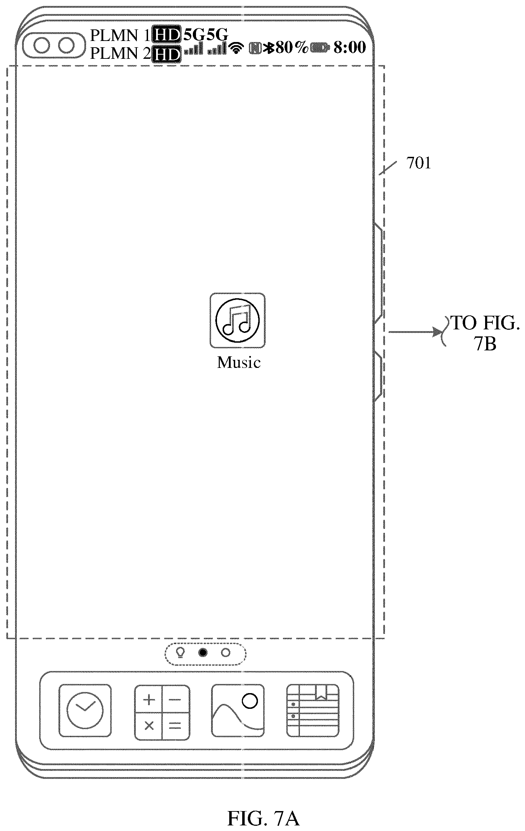

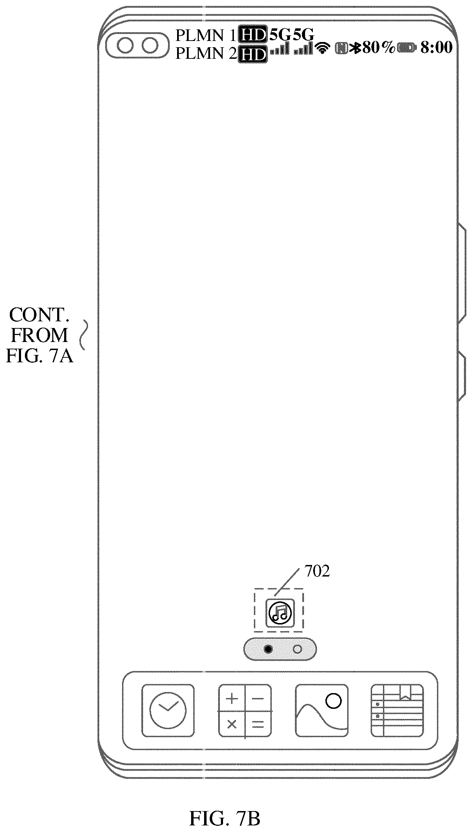

For example, FIG. 7A and FIG. 7B are a schematic interface diagram of another preset region according to an embodiment of this application. On an interface shown in FIG. 7A, the first screen of the terminal device may display one first interface element (for example, a music application icon), and the first interface element is located in any position in a target region 701.

When the terminal device receives a trigger operation performed by the user on a region in which the navigation point is located on the interface shown in FIG. 7A, the terminal device may display an interface shown in FIG. 7B. On the interface shown in FIG. 7B, one second interface element may be displayed in a preset region 702 of the interface, and the second interface element is located on the upper side of the navigation point.

It may be understood that an area occupied by the preset region 702 on the interface shown in FIG. 7B may be understood as the minimum value of the area occupied by the preset region.

In a possible implementation, the icons in the preset region may be displayed in different manners for different interfaces. For example, when there are many icons displayed on the desktop, the scaled-down first interface element may be displayed in the preset region for convenience of a user operation. When there are few icons displayed on the desktop, the first interface element may be displayed in the original size in the preset region for convenience of a user operation. In other words, when the user operates the navigation point region to a different desktop, the second interface element displayed in the preset region may be a scaled-down first interface element or a first interface element that is not scaled down.

On the interface shown in FIG. 5A, the region 504 in which the navigation point is located may include the navigation point corresponding to the first screen and the navigation point corresponding to the second screen. The region 504 in which the navigation point is located may be gray, to indicate that the user is currently triggering the navigation point.

It may be understood that, on the interface shown in FIG. 5C, when the first interface element is scaled down to the preset region 503, the region 504 in which the navigation point is located may not include the navigation point corresponding to the leftmost home screen. Alternatively, it is understood as that the terminal device may not scale down the interface on which the leftmost home screen is located.

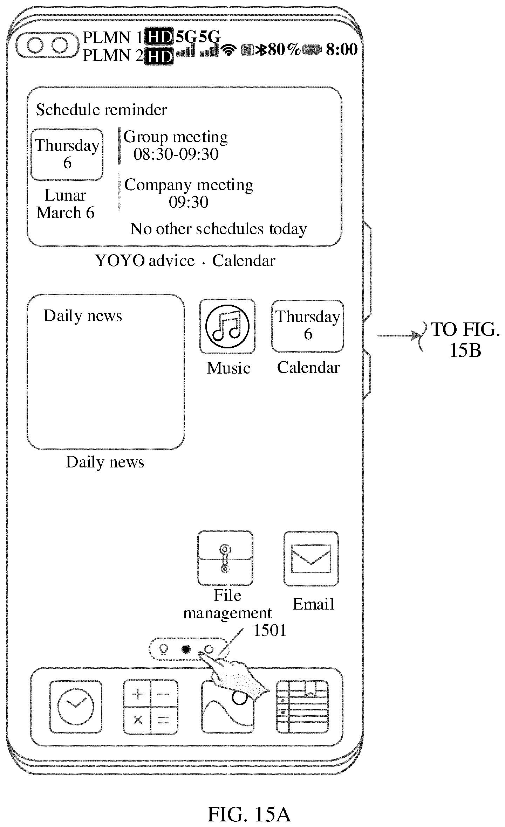

In a possible implementation, the region in which the navigation point is located may alternatively include the navigation point corresponding to the leftmost home screen. Alternatively, it is understood as that the terminal device may scale down the icon on the interface of the leftmost home screen and display the icon in the preset region (refer to embodiments corresponding to FIG. 15A to FIG. 15E). This is not limited in embodiments of this application.

It may be understood that on the interface shown in FIG. 5A, a name of any icon in the target region may be displayed on the lower side of the icon, and after the first interface element is scaled down, a name of any icon in the preset region on the interface shown in FIG. 5C may not be displayed on the lower side of the icon. This can avoid a case in which it is difficult for the user to view the name clearly after the icon and the name of the icon are scaled down.

It may be understood that in the process of scaling down the first interface element on the interface shown in FIG. 5A to display the interface shown in FIG. 5C, a position and a size of a wallpaper may not change. In other words, a wallpaper on the interface shown in FIG. 5A is consistent with a wallpaper on the interface shown in FIG. 5C.

In the interface display method described in embodiments of this application, if the desktop of the terminal device includes a wallpaper, regardless of how the icon on the desktop is processed, a position and a size of the wallpaper do not change. Details are not described again below. In addition, to avoid impact on other icons on the interface when the wallpaper is displayed, in the following embodiments, an example in which the terminal device does not display the wallpaper is used for description.

It may be understood that in the process of moving the first interface element on the interface shown in FIG. 5A downward to display the interface shown in FIG. 5C, the position of the status bar and the position of the dock bar do not change.

In a possible implementation, a name of any icon in the preset region on the interface shown in FIG. 5C may also be displayed on the lower side of the icon. This is not limited in embodiments of this application.

In the following, the interface display method in embodiments of this application is further described by using an example in which the terminal device switches from the interface shown in FIG. 5A to the interface shown in FIG. 5C after the region in which the navigation point is located is triggered. It should be noted that any method in the following embodiments may also be applied to a scenario in which the terminal device switches from the interface shown in FIG. 5A to the interface shown in FIG. 5B after the region in which the navigation point is located is triggered. Details are not described again below.

Based on embodiments corresponding to FIG. 5A to FIG. 5C, the terminal device may open the interface corresponding to the second interface element based on an operation performed by the user on the second interface element.

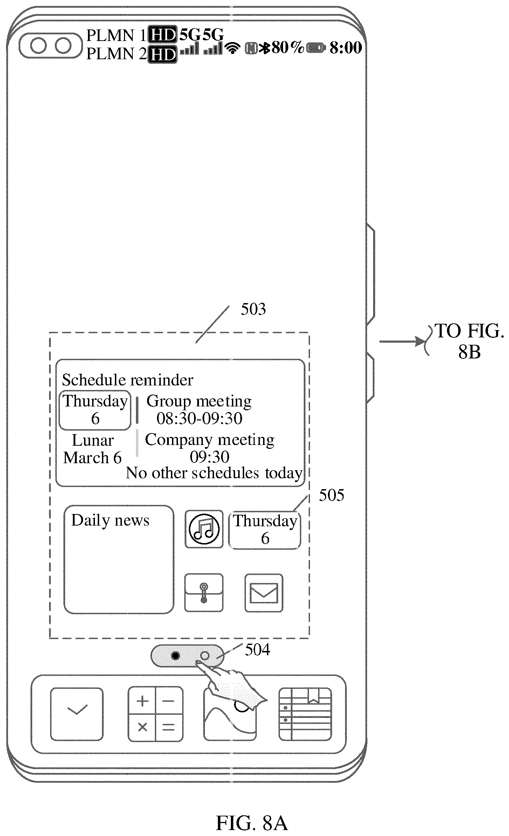

For example, FIG. 8A to FIG. 8C are a schematic diagram of a startup interface according to an embodiment of this application. In embodiments corresponding to FIG. 8A to FIG. 8C, an example in which the second interface element is a calendar application icon is used for description.

On an interface shown in FIG. 8A, when the trigger operation is continuously performed on the region 504 in which the navigation point is located, and the terminal device receives that the user moves a finger (or a stylus, or the like) from the region 504 in which the navigation point is located to the preset region, for example, a position of a calendar application icon 505, the terminal device may move a display focus to the calendar application icon 505, and the terminal device may highlight the calendar application icon 505.

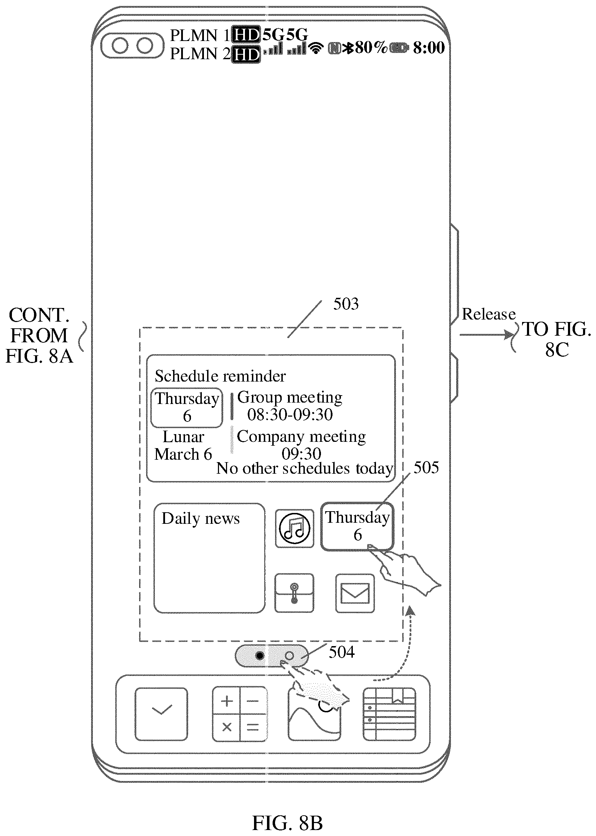

A method of highlighting the calendar application icon 505 may include one or more of the following: for example, enlarging the calendar application icon 505 for display, thickening an edge of the calendar application icon 505 for display, or shaking the calendar application icon 505 for display. The highlighting method is not limited in embodiments of this application. For example, on an interface shown in FIG. 8B, the terminal device may enlarge the calendar application icon 505 and thicken the edge of the calendar application icon 505 for display. Content displayed on the interface shown in FIG. 8B may be similar to the content displayed on the interface shown in FIG. 8A. Details are not described herein again.

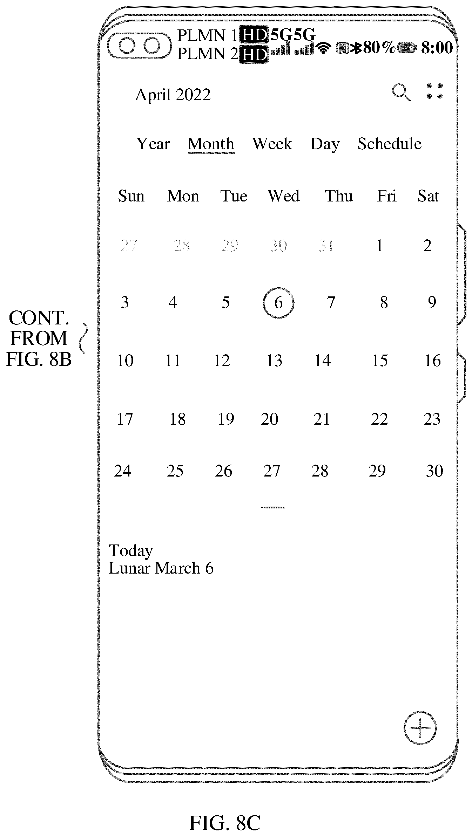

On the interface shown in FIG. 8B, when the terminal device highlights the calendar application icon 505 (or understood as that the focus displayed by the terminal device is located in the position in which the calendar application icon 505 is located), and the terminal device receives a release operation (the finger or the stylus is lifted off a touch surface of the terminal device) performed by the user, the terminal device may open a calendar application corresponding to the calendar application icon 505 in response to the release operation, and display a calendar interface shown in FIG. 8C. The interface shown in FIG. 8C may include: a control for searching for a schedule in the calendar application (for example, a control corresponding to a magnifying glass icon in the upper right corner shown in FIG. 8C), a control for viewing more functions in the calendar application (for example, a control corresponding to a four-dot icon in the upper right corner shown in FIG. 8C), a control for creating a new schedule (for example, a control corresponding to a plus icon in the lower right corner shown in FIG. 8C), calendar information corresponding to April 2022, information indicating a lunar calendar date, and the like

For example, an example in which the trigger operation is a touch and press operation in embodiments corresponding to FIG. 5A to FIG. 5C and FIG. 8A to FIG. 8C is used to describe a process of opening any application on the desktop by the user with one hand. For example, when the user holds, by using the left hand, the terminal device displaying the interface shown in FIG. 5A, and the terminal device receives an operation of touching and pressing the region 502 in which the navigation point is located performed by the left thumb of the user, the terminal device may display the interface shown in FIG. 8A. When the touch and press operation is continuously performed on the region 504 in which the navigation point is located, and the terminal device receives an operation of moving a finger from the region 504 in which the navigation point is located to the position in which the calendar application icon 505 is located performed by the user, the terminal device may highlight the calendar application icon 505, for example, displaying the interface shown in FIG. 8B. When the focus displayed by the terminal device is maintained at the position in which the calendar application icon 505 is located on the interface shown in FIG. 8B, and the terminal device receives a release operation performed by the user, the terminal device may open the calendar application and display the interface corresponding to the calendar application shown in FIG. 8C.

In a possible implementation, in a moving process of the first interface element, or after the first interface element stops moving, if the terminal device detects that the first operation ends, the terminal device resumes the interface shown in FIG. 5A.

Based on this, when the user holds the terminal device displaying the interface shown in FIG. 5A with one hand, and the user cannot trigger the calendar application icon 501 located on the upper side of the interface with one hand, the first interface element may be scaled down based on a trigger operation performed on the region 502 in which the navigation point is located, so that the terminal device displays the interface shown in FIG. 8A. Further, the user may conveniently open the calendar application by moving the finger from the region 502 in which the navigation point is located to the position in which the calendar application icon 505 is located and releasing the finger on the interface shown in FIG. 8A, to implement single-hand control of the first interface element.

Based on embodiments corresponding to FIG. 5A to FIG. 5C, the terminal device may also support a plurality of filling methods for arranging icons in the process of scaling down the first interface element. It may be understood that the filling method may be applied to the first interface element. For the descriptions of the first interface element, refer to embodiments corresponding to FIG. 5A to FIG. 5C. Details are not described herein again.

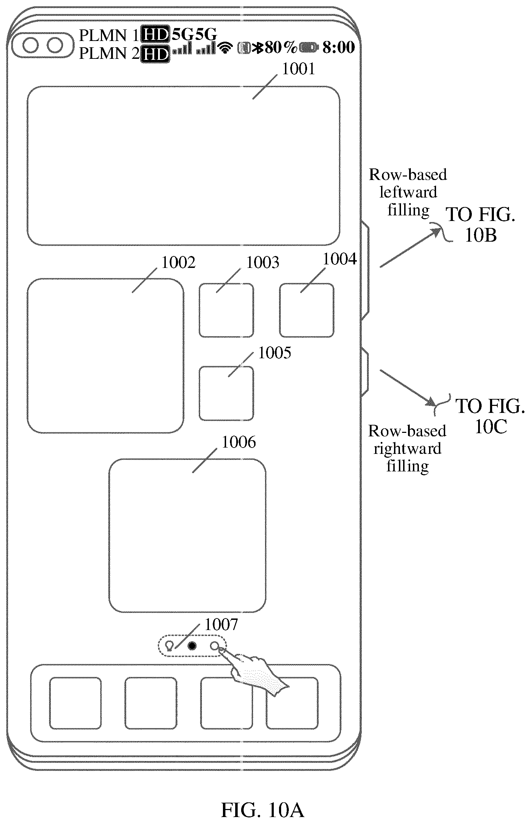

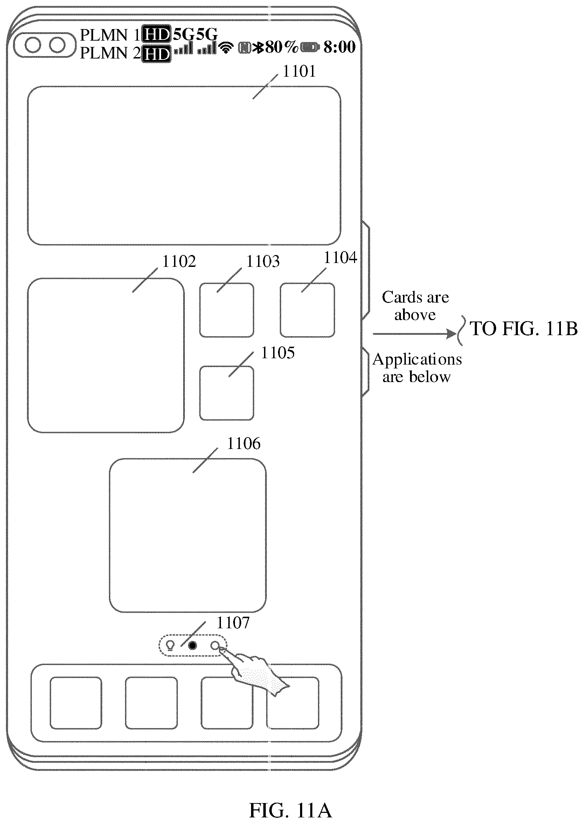

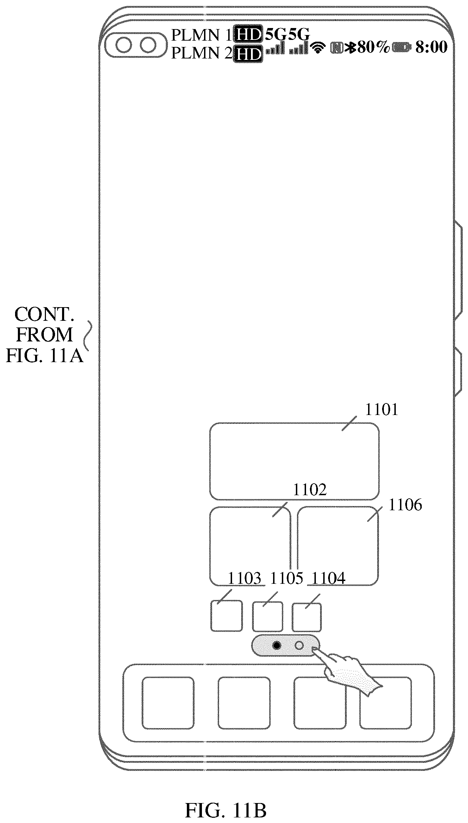

For example, the terminal device may support methods such as column-based filling (refer to embodiments corresponding to FIG. 9A to FIG. 9C), row-based filling (refer to embodiments corresponding to FIG. 10A to FIG. 10C), or full-regrouping-based filling (refer to embodiments corresponding to FIG. 11A and FIG. 11B).

Method 1: The terminal device supports an icon arrangement manner of column-based filling. The column-based filling may include: Column-based downward filling, column-based upward filling, and the like. The column-based upward filling may be understood as moving an icon upward in a column of the terminal device to fill a blank region in the column in which the icon is located.

For example, FIG. 9A to FIG. 9C are a schematic interface diagram of column-based filling according to an embodiment of this application.

An interface shown in FIG. 9A may include: a card 901, a card 902, an application icon 903, an application icon 904, an application icon 905, a card 906, an application icon in a dock bar, and a region 907 in which a navigation point is located.

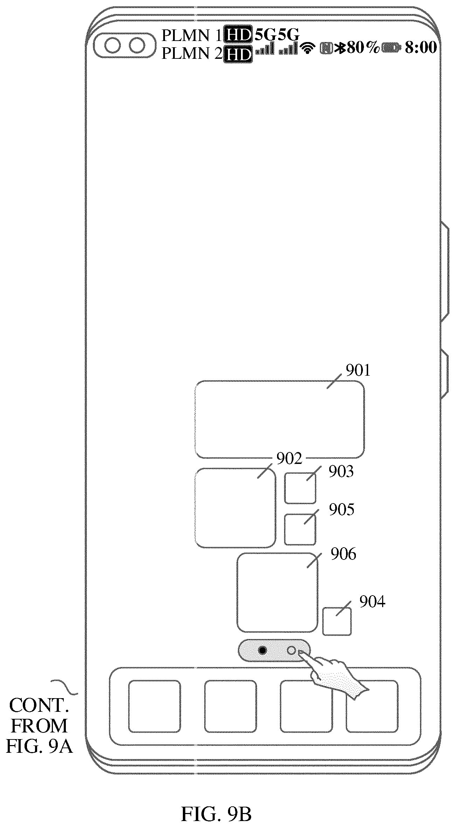

In an implementation, the terminal device may support column-based downward filling of the first interface element in a processing of scaling down the first interface element. For example, on the interface shown in FIG. 9A, when the terminal device receives a trigger operation performed by the user on the region 907 in which the navigation point is located, the terminal device may adjust relative positions between the icons displayed on the interface shown in FIG. 9A based on the column-based downward filling principle, and display the interface shown in FIG. 9B.

The interface shown in FIG. 9A is compared with the interface shown in FIG. 9B displayed after the first interface element is scaled down to the preset region. In the column-based downward filling process, the terminal device may move the application icon 904 on the interface shown in FIG. 9A to the bottom of the column in which the application icon 904 is located and scale down an icon of a target region on the interface shown in FIG. 9A. On the interface shown in FIG. 9B, the terminal device has moved the application icon 904 to the lower right side of the card 906, but relative positions between the card 901, the card 902, the application icon 903, the application icon 905, and the card 906 may remain unchanged.

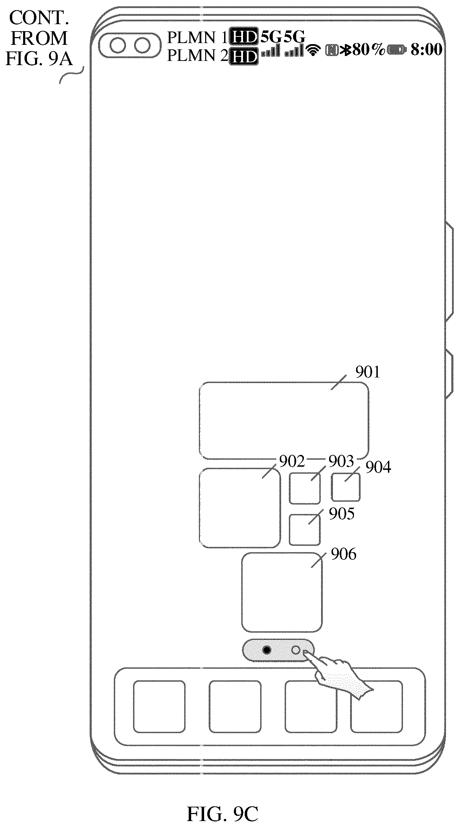

In another implementation, the terminal device may support column-based upward filling of the first interface element in a processing of scaling down the first interface element. For example, on the interface shown in FIG. 9A, when the terminal device receives a trigger operation performed by the user on the region 907 in which the navigation point is located, the terminal device may adjust relative positions between the icons displayed on the interface shown in FIG. 9A based on the column-based upward filling principle, and display the interface shown in FIG. 9C.

The interface shown in FIG. 9A is compared with the interface shown in FIG. 9C displayed after the first interface element is scaled down to the preset region. In the column-based upward filling process, the terminal device may move the application icon 904 on the interface shown in FIG. 9A to the top of the column in which the application icon 904 is located and scale down an icon of a target region on the interface shown in FIG. 9A. On the interface shown in FIG. 9B, the terminal device has moved the application icon 904 to the lower side of the card 901, but relative positions between the card 901, the card 902, the application icon 903, the application icon 905, and the card 906 may remain unchanged.

Based on this, in the process of scaling down the first interface element, the terminal device may maximally maintain original relative positions between the icons based on the column-based filling principle, so that the user can quickly find a scaled-down icon in the preset region based on original positions of the icons.

Method 2: The terminal device supports an icon arrangement manner of row-based filling. The row-based filling may include: Row-based leftward filling, row-based rightward filling, and the like.

The row-based filling may be understood as moving an icon in a direction in which a row of the terminal device is located to fill a blank region in the row in which the icon is located. The row-based leftward filling may be understood as moving an icon leftward in a row of the terminal device to fill a blank region in the row in which the icon is located. The row-based rightward filling may be understood as moving an icon rightward in a row of the terminal device to fill a blank region in the column in which the icon is located.

For example, FIG. 10A to FIG. 10C are a schematic interface diagram of row-based filling according to an embodiment of this application.

An interface shown in FIG. 10A may include: a card 1001, a card 1002, an application icon 1003, an application icon 1004, an application icon 1005, a card 1006, an application icon in a dock bar, and a region 1007 in which a navigation point is located.

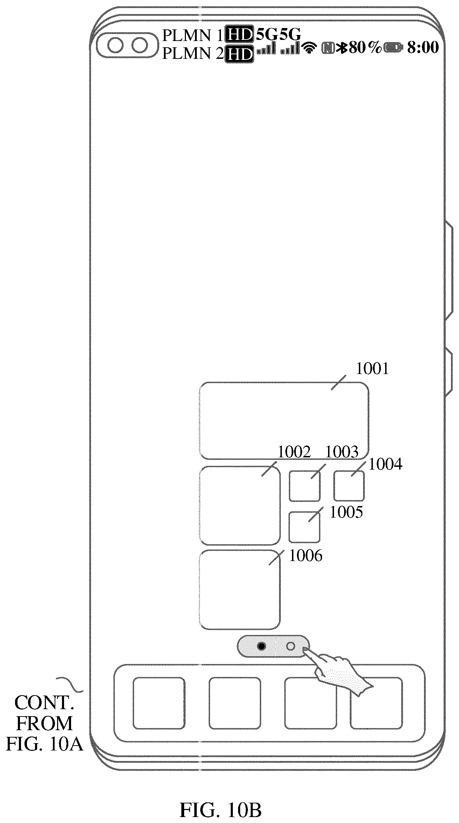

In an implementation, the terminal device may support row-based leftward filling of the first interface element in a processing of scaling down the first interface element. For example, on the interface shown in FIG. 10A, when the terminal device receives a trigger operation performed by the user on the region 1007 in which the navigation point is located, the terminal device may adjust relative positions between the icons displayed on the interface shown in FIG. 10A based on the row-based leftward filling principle, and display the interface shown in FIG. 10B.

The interface shown in FIG. 10A is compared with the interface shown in FIG. 10B displayed after the first interface element is scaled down to the preset region. In the row-based leftward filling process, the terminal device may move the card 1006 on the interface shown in FIG. 10A to the leftmost position in the row in which the card 1006 is located and scale down an icon of a target region on the interface shown in FIG. 10A. On the interface shown in FIG. 10B, the terminal device has moved the card 1006 to the lower side of the card 1002, but relative positions between the card 1001, the card 1002, the application icon 1003, the application icon 1004, and the application icon 1005 may remain unchanged.

In a possible implementation, the terminal device may learn a state in which the user uses the terminal device by using the left hand or the right hand, and when it is detected that the user holds the terminal device by using the left hand, row-based leftward filling is performed on the first interface element in the process of scaling down the first interface element, so that the second interface element filled to the left is close to the left hand. This is convenient for the user to perform an operation by using the left hand.

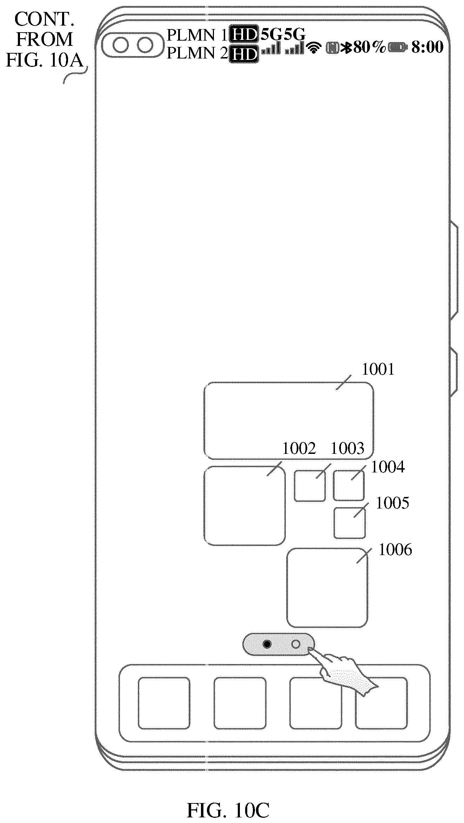

In another implementation, the terminal device may support row-based rightward filling of the first interface element in a processing of scaling down the first interface element. For example, on the interface shown in FIG. 10A, when the terminal device receives a trigger operation performed by the user on the region 1007 in which the navigation point is located, the terminal device may adjust positions of the icons displayed on the interface shown in FIG. 10A based on the row-based rightward filling principle, and display the interface shown in FIG. 10C.

The interface shown in FIG. 10A is compared with the interface shown in FIG. 10C displayed after the first interface element is scaled down to the preset region. In the row-based rightward filling process, the terminal device may move the card 1006 on the interface shown in FIG. 10A to the rightmost position in the row in which the card 1006 is located, move the application icon 1005 to the rightmost position in the row in which the application icon 1005 is located, and scale down an icon of a target region on the interface shown in FIG. 10A. On the interface shown in FIG. 10C, the terminal device has moved the application icon 1005 to the lower side of the application icon 1004 and the card 1006 to the lower side of the application icon 1005, but relative positions between the card 1001, the card 1002, the application icon 1003, and the application icon 1004 may remain unchanged.

In a possible implementation, the terminal device may learn a state in which the user uses the terminal device by using the left hand or the right hand, and when it is detected that the user holds the terminal device by using the right hand, row-based rightward filling is performed on the first interface element in the process of scaling down the first interface element, so that the second interface element filled to the right is close to the right hand. This is convenient for the user to perform an operation by using the right hand.

Based on this, in the process of scaling down the first interface element, the terminal device may maximally maintain original relative positions between the icons based on the row-based filling principle, so that the user can quickly find a scaled-down icon in the preset region based on original positions of the icons.

Method 3: The terminal device supports an icon arrangement manner of full-regrouping-based filling. The full-regrouping-based filling may support a filling principle that a card is on the top and an application is on the bottom.

It may be understood that, because a size of the card is usually larger than a size of an application icon, the card may be placed at an upper position in the preset region during full-regrouping-based filling, so that the user can trigger an icon on the top of the preset region effortlessly, and the user's sense of use is improved.

For example, FIG. 11A and FIG. 11B are a schematic interface diagram of full-regrouping-based filling according to an embodiment of this application.

An interface shown in FIG. 11A may include: a card 1101, a card 1102, an application icon 1103, an application icon 1104, an application icon 1105, a card 1106, an application icon in a dock bar, and a region 1107 in which a navigation point is located.

The terminal device may support full-regrouping-based leftward filling of the first interface element in a processing of scaling down the first interface element. For example, on the interface shown in FIG. 11A, when the terminal device receives a trigger operation performed by the user on the region 1107 in which the navigation point is located, the terminal device may adjust relative positions between the icons displayed on the interface shown in FIG. 11A based on the full-regrouping-based filling principle, and display the interface shown in FIG. 11B.

The interface shown in FIG. 11A is compared with the interface shown in FIG. 11B displayed after the first interface element is scaled down to the preset region. In the full-regrouping-based filling process, the terminal device may move a card (for example, the card 1106) on the interface shown in FIG. 11A upward, move an application icon (for example, an application icon 1103, an application icon 1104, and an application icon 1105) to the lower side of all cards, and scale down an icon of the target region on the interface shown in FIG. 11A. On the interface shown in FIG. 11B, the terminal device has moved the card 1106 to the right side of the card 1102, the application icon 1103 and the application icon 1104 to the lower side of the card 1102, and the application icon 1105 to the lower side of the card 1106.

It may be understood that, in the full regrouping process, the terminal device may adjust relative positions between the icons based on the principle that a card is on the top and an application icon is on the bottom. On the interface shown in FIG. 11B, the card 1102 and the card 1106 may alternatively be located on the upper side of the card 1101. The positions between the application icon 1103, the application icon 1104, and the application icon 1105 may not be limited, provided that the application icon 1103, the application icon 1104, and the application icon 1105 are located on the lower side of all the cards on the interface.

In a possible implementation, due to different areas occupied by the icons, the terminal device may alternatively move an icon that occupies a larger area upward and an icon that occupies a smaller area downward based on a principle that the areas occupied by the icons are from large to small. Alternatively, an icon that occupies a larger area is moved upward, and an icon that occupies a smaller area is moved to another location in the preset region.

For example, on the interface shown in FIG. 11B, the terminal device may move upward an icon that occupies the largest area, for example, the card 1101 (for example, the card 1101 may occupy positions of eight application icons); move upward an icon with a larger area, for example, the card 1102 and the card 1106 (for example, the card 1102 and the card 1106 each may occupy positions of four application icons), to the lower side of the card 1101; and move downward an icon that occupies the smallest area, for example, the application icon 1103, the application icon 1104, and the application icon 1105.

Based on this, the terminal device may place the card in the upper position of the preset region based on the full-regrouping-based filling manner, so that the user can trigger an icon on the top of the preset region effortlessly, and the user's sense of use is improved.

In a possible implementation, based on the embodiments corresponding to FIG. 5A to FIG. 11B, the terminal device may also support the user in independently setting the column-based filling manner, the row-based filling manner, and the full-regrouping-based filling manner, so that the terminal device can adjust the filling manner based on a user requirement and enhance the user's use feeling.

It may be understood that in different scenarios, the filling manner may not be limited to the column-based filling, the row-based filling, and the full-regrouping-based filling. This is not limited in embodiments of this application.

Based on embodiments corresponding to FIG. 5A to FIG. 5C, the terminal device moves the position of the focus displayed on the interface in response to a movement of the finger of the user. For example, in response to a movement of the finger of the user in the preset region, the terminal device may move a displayed position of the focus in the preset region.

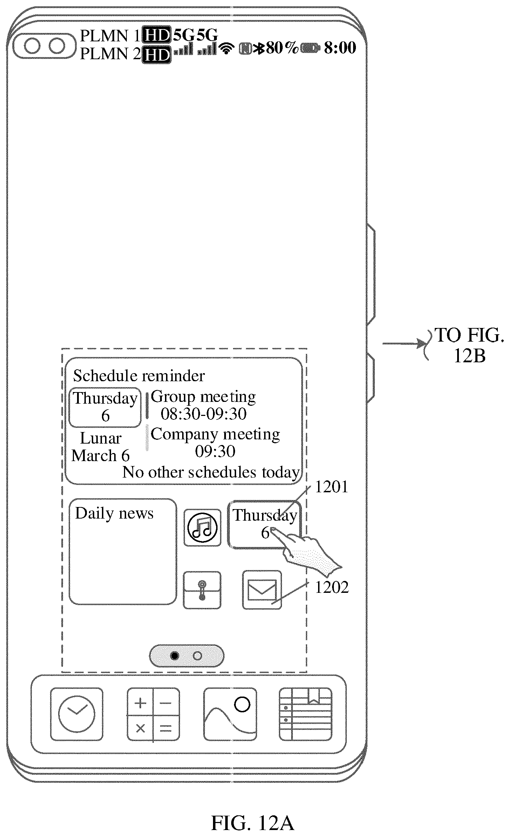

For example, FIG. 12A to FIG. 12C are a schematic interface diagram of selecting different applications according to an embodiment of this application.

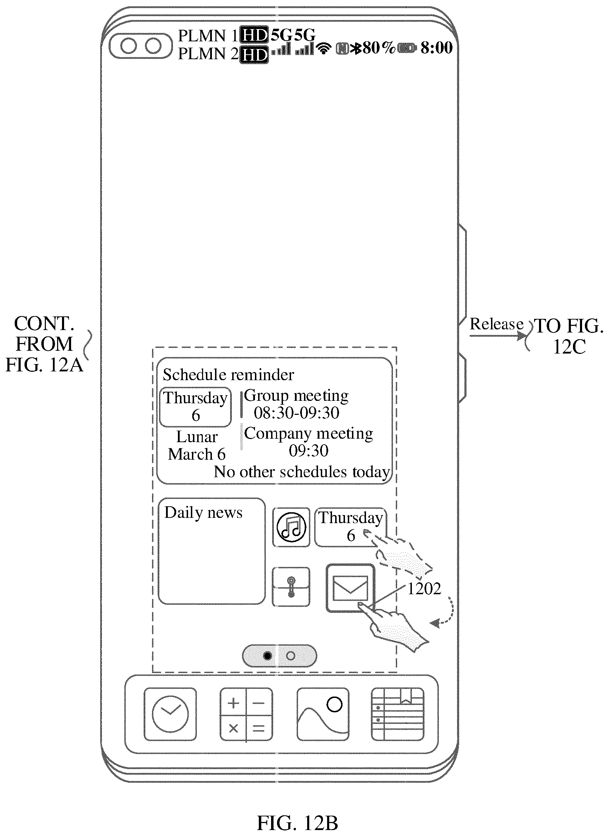

On an interface shown in FIG. 12A, when a trigger operation is continuously performed on a calendar application icon 1201 in a preset region, the terminal device receives an operation of moving the finger from a position in which the calendar application icon 1201 is located to a position in which an email application icon 1202 is located performed by the user, in response to the operation of moving the finger performed by the user, the terminal device may move the display focus from the position in which the calendar application icon 1201 is located to the position in which the email application icon 1202 is located and highlight the email application icon 1202. For example, the terminal device displays an interface shown in FIG. 12B.

On the interface shown in FIG. 12B, for a manner in which the email application icon 1202 on the interface is highlighted, refer to the descriptions in embodiments corresponding to FIG. 5A to FIG. 5C. Details are not described herein again. For content displayed on the interface shown in FIG. 12A (or FIG. 12B), refer to the interface shown in FIG. 5C. Details are not described herein again.

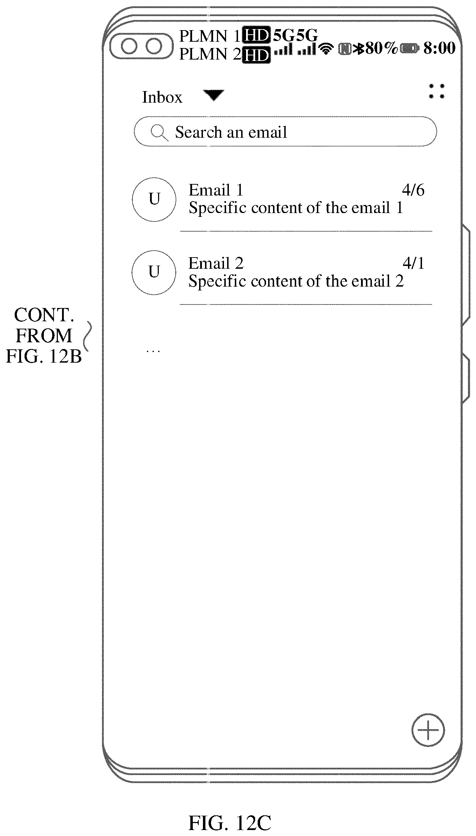

On the interface shown in FIG. 12B, when the terminal device highlights the email application icon 1202, and the terminal device receives a release operation of the user, the terminal device may open an email application and display the email application on the interface shown in FIG. 12C. The interface shown in FIG. 12C may include: a control for viewing more functions in the email application (for example, a control corresponding to a four-dot icon in the upper right corner shown in FIG. 12C), a text box for searching an email, information about an email 1 that is received on April 6 and specific content of the email 1, information about an email 2 that is received on April 1 and specific content of the email 2, a control for creating a new email (for example, a control corresponding to a plus icon in the lower right corner shown in FIG. 12C), and the like In embodiments of this application, specific content displayed in the email application on the interface shown in FIG. 12C is not limited.

It may be understood that when the terminal device is continuously pressed, the terminal device may select and highlight different second interface elements based on a movement of the finger of the user. When the user releases the finger, the terminal device may open a second interface element corresponding to a release position by default.

In a possible implementation, when any second interface element is highlighted, and the terminal device receives that the finger of the user moves from the any second interface element to a blank region in the preset region, the terminal device does not highlight the any second interface element in response to the moving operation of the finger of the user. Further, when the terminal device receives an operation of releasing the finger of the user in the blank region, the terminal device may maintain a scaled-down state of the second interface element in the preset region or resume displaying of the first interface element.

Based on this, the terminal device may select different second interface elements based on a movement of the focus in the preset region, so that the user can flexibly open different second interface elements.

Based on embodiments corresponding to FIG. 5A to FIG. 5C, the terminal device may support the focus in sliding out of the preset region.

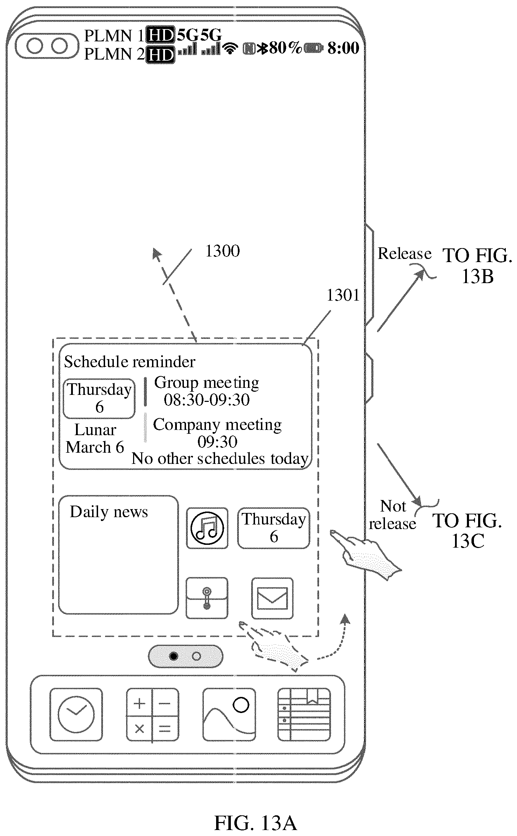

For example, FIG. 13A to FIG. 13D are a schematic interface diagram of sliding out a preset region according to an embodiment of this application.

On an interface shown in FIG. 13A, when the terminal device receives that the user moves the finger from the inside of a preset region 1301 to the outside of the preset region 1301, the focus displayed by the terminal device also adaptively moves from the inside of the preset region 1301 to the outside of the preset region 1301 in response to the moving operation of the finger of the user. Further, the terminal device may determine an interface displayed in the terminal device based on whether the release operation of the user is outside the preset region 1301.

The preset region 1301 may be a region in which the dotted line box shown in FIG. 13A is located. When the user releases the finger outside the preset region 1301, the terminal device may resume displaying of the first interface element in the target region. Alternatively, when the user does not release the finger outside the preset region 1301, the terminal device may maintain displaying of the second interface element in the preset region 1301.

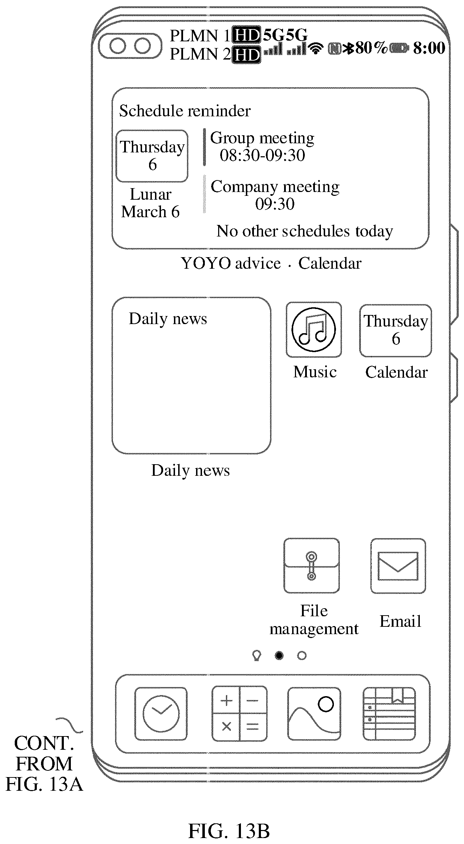

In an implementation, on the interface shown in FIG. 13A, when the terminal device moves the focus out of the preset region 1301, and the terminal device receives a release operation of the user, the terminal device may restore an original desktop. For example, the terminal device may move and enlarge an icon in the preset region 1301 in a direction pointed by an arrow 1300, to restore a position and a size of the icon. For example, the terminal device may switch from the interface shown in FIG. 13A to the interface shown in FIG. 13B. It may be understood that the process of restoring positions and size of the icons may be a dynamic process. Content displayed on the interface shown in FIG. 13B may be similar to the content displayed on the interface shown in FIG. 1. Details are not described herein again.

It may be understood that an operation of moving the focus of the terminal device out of the preset region 1301 and releasing the focus performed by the user may be understood as that the user does not need to trigger the second interface element. In this case, the terminal device may restore an original display position of the first interface element.

In a possible implementation, when the terminal device receives an operation of moving the focus to the blank region in the preset region 1301 and releasing the focus performed by the user, the terminal device may also restore the original display position of the first interface element. Alternatively, the user directly releases the focus at the navigation point, and the terminal device may also restore the original display position of the first interface element, for example, displaying the interface shown in FIG. 13B.

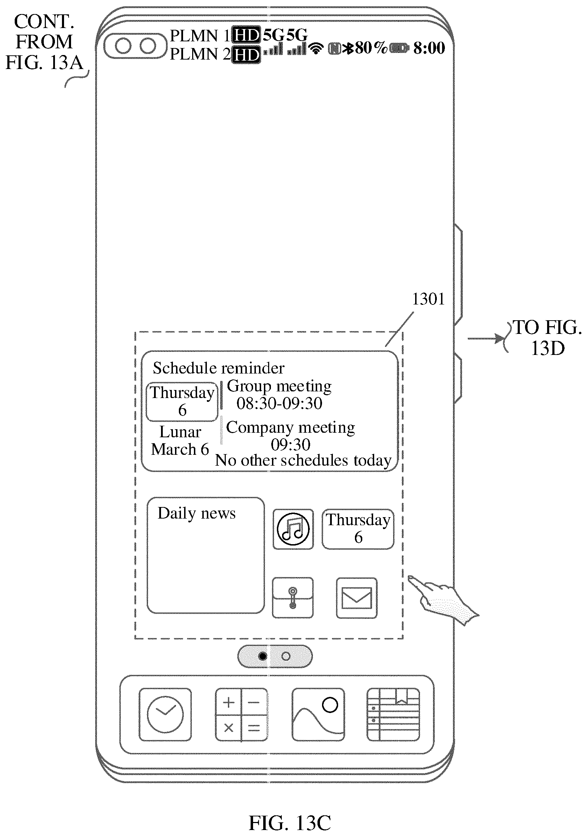

In another implementation, on the interface shown in FIG. 13A, when the terminal device receives that the user moves the focus out of the preset region 1301, and the terminal device receives an operation in which the user does not release (or understood as continuous pressing) the focus, the terminal device may display the interface shown in FIG. 13C. Content displayed on the interface shown in FIG. 13C may be similar to the content displayed on the interface shown in FIG. 13A. Details are not described herein again.

It may be understood that an operation in which the user moves the focus of the terminal device to a region other than the preset region 1301 and the region in which the navigation point is located and does not release the focus may be understood that the user may have a requirement for continuing to trigger the second interface element, and therefore, the terminal device may maintain the scaled-down state of the second interface element.

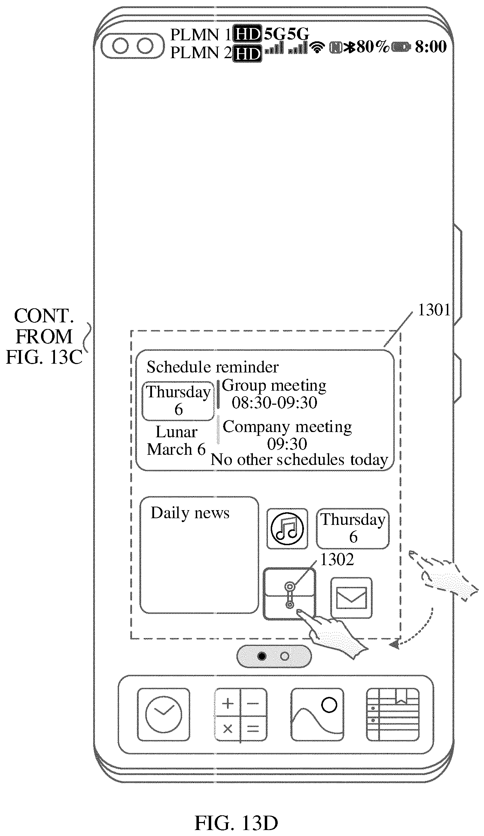

Further, On the interface shown in FIG. 13C, when the terminal device receives the operation of moving the finger from outside the preset region 1301 to a position of the file management application icon 1302 in the preset region 1301 performed by the user, the terminal device may highlight the file management application icon 1302. For example, the terminal device displays the interface shown in FIG. 13D.

Based on this, the terminal device may cancel displaying of the scaled-down icon of the desktop and restore the original display position of the first interface element based on the operation of moving the finger out of the preset region and releasing the finger performed by the user, to implement flexible control of the desktop by the user.

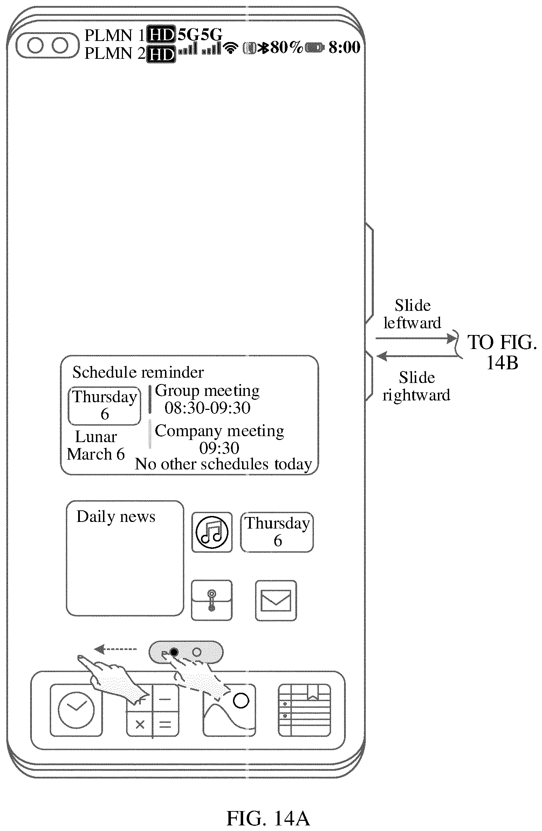

Based on embodiments corresponding to FIG. 5A to FIG. 5C, in a possible implementation, the terminal device may support viewing, in the preset region, another interface other than the leftmost home screen on the desktop (refer embodiments corresponding to FIG. 14A to FIG. 14D). Alternatively, the terminal device may support viewing an interface including the leftmost home screen on a first preset interface (refer to embodiments corresponding to FIG. 15A to FIG. 15E).

In an implementation, the terminal device may support viewing, in the preset region, another interface other than the leftmost home screen on the desktop.

For example, FIG. 14A to FIG. 14D are a schematic interface diagram of viewing another interface according to an embodiment of this application.

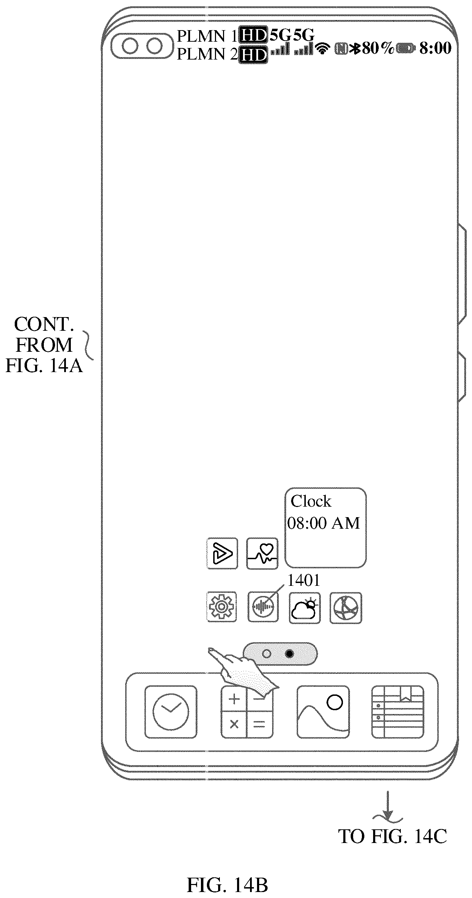

On an interface shown in FIG. 14A, when the trigger operation on the terminal device is continuously performed on the region in which the navigation point is located, and the terminal device receives an operation of sliding leftward without releasing performed by the user, the terminal device may display an interface shown in FIG. 14B. On the interface shown in FIG. 14B, the icon of the target region on the second screen in the terminal device may alternatively be scaled down and displayed in the preset region.

In a possible implementation, on the interface shown in FIG. 14B, the terminal device may alternatively display the interface shown in FIG. 14A when receiving an operation of sliding rightward without releasing performed by the user.

It may be understood that when the terminal device includes a plurality of interfaces, the terminal device may view the plurality of interfaces in the preset region based on an operation of sliding leftward or rightward in the region in which the navigation point is located without releasing performed by the user, to implement flexible control of an icon on any interface by the user.

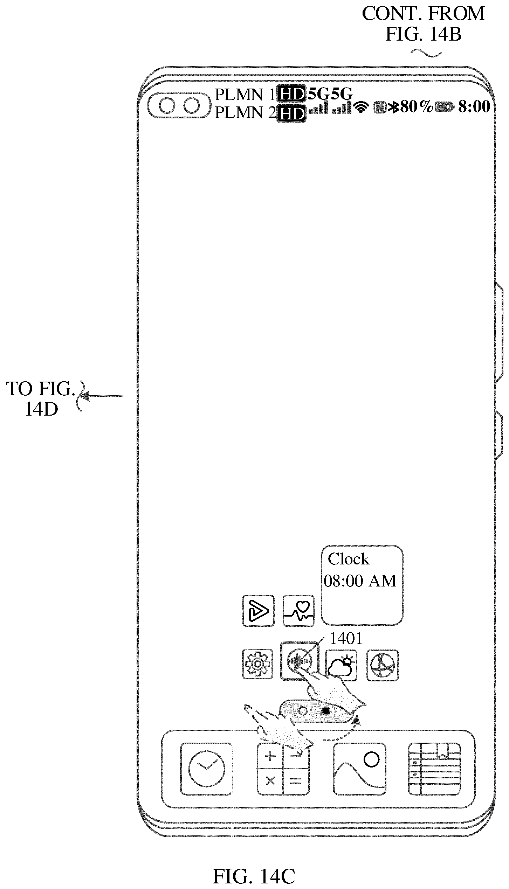

In a possible implementation, on the interface shown in FIG. 14B, when the terminal device receives an operation of moving the focus to the position in which the recorder application icon 1401 is located performed by the user, the terminal device may display an interface shown in FIG. 14C, to highlight the recorder application icon 1401.

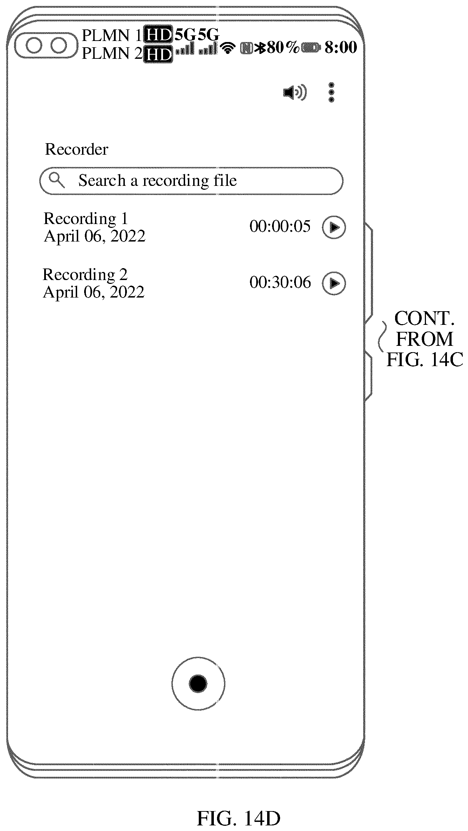

Further, on the interface shown in FIG. 14C, when the focus is continuously located in the position in which the recorder application icon 1401 is located, and the terminal device receives a release operation performed by the user, the terminal device may display an interface corresponding to the recorder application shown in FIG. 14D. The interface shown in FIG. 14D may include: a control located in the upper right corner of the display for opening more functions, a speaker control, an input box corresponding to recording file searching, a plurality of recording files, a recording opening control, and the like. The plurality of recording files include a recording 1, a recording 2, and the like. Recording time and recording duration corresponding to any recording file and a control for recording playing may be displayed around the recording file. For example, the recording 1 may be a recording file with duration of 5 seconds recorded on April 6, 2022, and the recording 2 may be a recording file with duration of 30 minutes and 6 seconds recorded on April 6, 2022.

Based on this, the terminal device may view another scaled-down interface in the preset region based on an operation of sliding leftward or rightward in the region in which the navigation point is located without releasing performed by the user, to implement flexible viewing of an icon in each scaled-down interface. Further, the terminal device may open any second interface element based on a user operation. Further, in a scenario in which a plurality of interfaces are included and any interface includes a plurality of elements, the terminal device may implement flexible triggering of a second interface element on a specific interface.

In another implementation, the terminal device may support viewing the interface including the leftmost home screen on the first preset interface.

For example, FIG. 15A to FIG. 15E are another schematic interface diagram of viewing another interface according to an embodiment of this application.

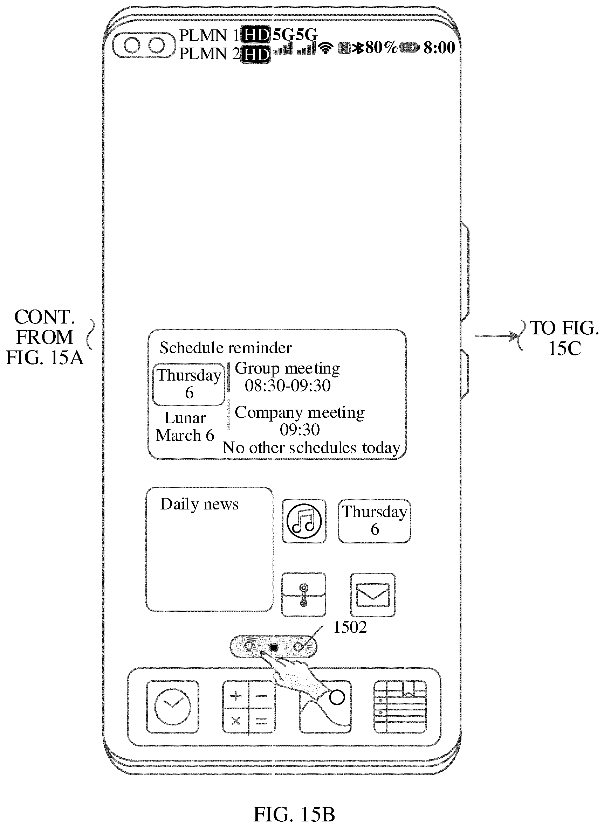

When the terminal device displays the main interface of the desktop as shown in FIG. 15A, and the terminal device receives a trigger operation performed by the user on the region 1501 in which the navigation point is located, the terminal device may display an interface shown in FIG. 15B. On the interface shown in FIG. 15B, a region 1502 in which the navigation point is located may include: the navigation point corresponding to the leftmost home screen, or it is understood that the terminal device may scale down the icon on the interface on which the leftmost home screen is located and display the icon in the preset region. The navigation point corresponding to the leftmost home screen in the region 1502 in which the navigation point is located is in an unselected state, and the navigation point corresponding to the first screen in the region 1502 in which the navigation point is located is in a selected state.

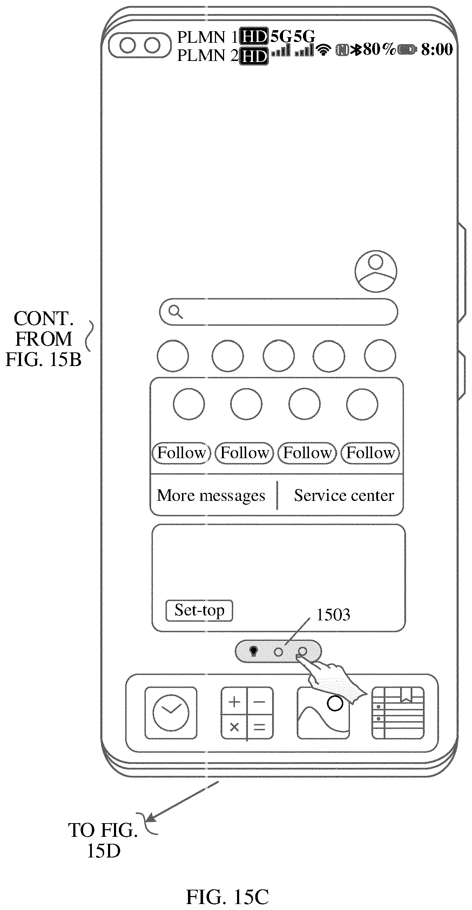

On an interface shown in FIG. 15B, when the trigger operation on the terminal device is continuously performed on the region 1502 in which the navigation point is located, and the terminal device receives an operation of sliding rightward without releasing performed by the user, the terminal device may display an interface shown in FIG. 15C. On the interface shown in FIG. 15C, the preset region may include an icon displayed after an icon in the leftmost home screen is scaled down. The navigation point corresponding to the leftmost home screen in a region 1503 in which the navigation point is located is in the selected state.

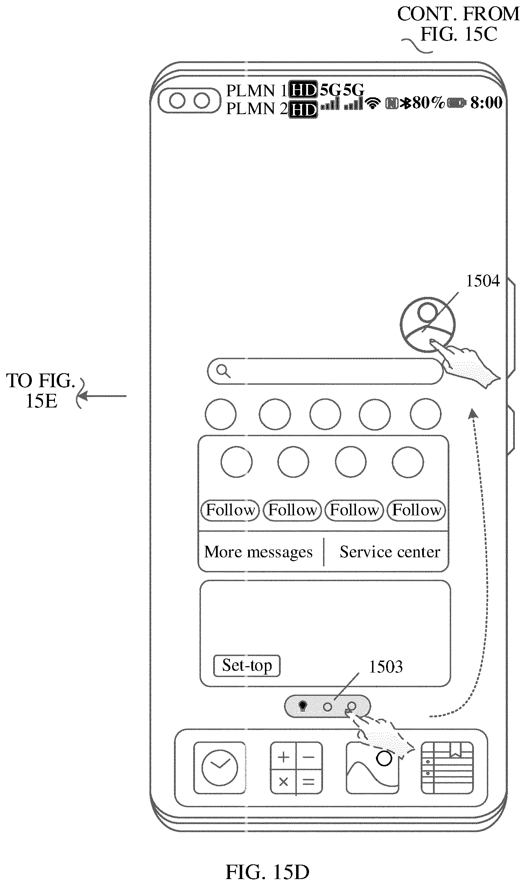

In a possible implementation, on the interface shown in FIG. 15C, when the terminal device receives an operation of moving the focus from the region 1503 in which the navigation point is located to the position in which an account icon 1504 is located performed by the user, the terminal device may display an interface shown in FIG. 15D, to highlight the account icon 1504.

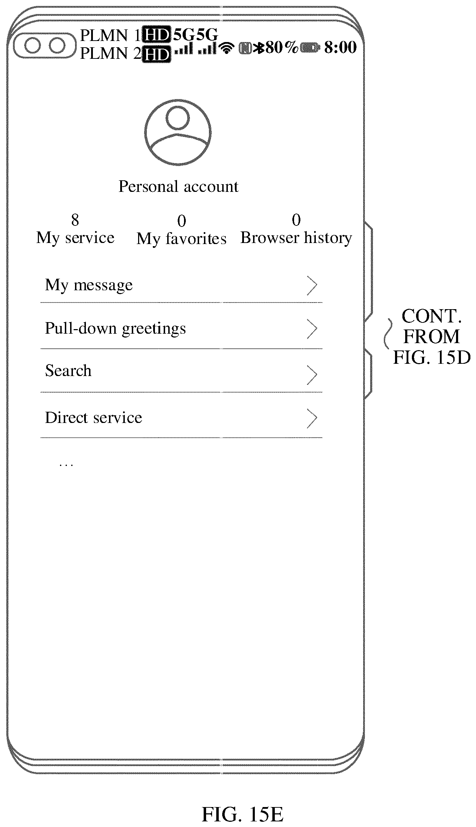

Further, on the interface shown in FIG. 15D, when the focus is continuously located in a position in which the account icon 1504 is located, and the terminal device receives a release operation performed by the user, the terminal device may open a function interface corresponding to the account icon 1504, and display an interface shown in FIG. 15E. The interface shown in FIG. 15E may include: personal account information, a my-service control, a my-favorites control, a browse history control, a my-message control, a control for setting pull-down greetings, a search control, a control for setting a direct service, and the like. Specific content displayed on the interface shown in FIG. 15E is not limited in embodiments of this application.

It may be understood that because the region in which the navigation point is located is not displayed on the leftmost home screen shown in FIG. 4C, even if the terminal device may scale down the icon on the leftmost home screen, the icon on the leftmost home screen still cannot be scaled down based on an operation performed by the user on the leftmost home screen. Therefore, the user may scale down, on another desktop other than the leftmost home screen, for example, interfaces such as the first screen or the second screen, the icon on the leftmost home screen based on a plurality of trigger operations performed on the region in which the navigation point is located (for example, based on the operation in embodiments corresponding to FIG. 15), so that the terminal device displays an interface shown in FIG. 15D.

Based on this, the terminal device may scale down the icon on the leftmost home screen, and conveniently open a function interface corresponding to any icon on the leftmost home screen based on triggering of the user for the icon on the scaled-down leftmost home screen in the preset region.

Based on embodiments corresponding to FIG. 5A to FIG. 5C, the terminal device may support default displaying of a frequently used application icon (or frequently used card) in the preset region when displaying the preset region.

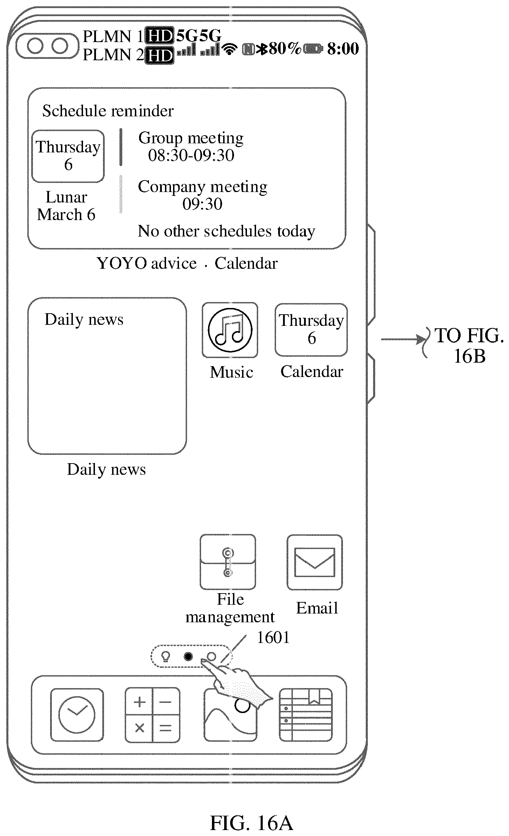

For example, FIG. 16A to FIG. 16C are a schematic interface diagram of viewing a frequently used application according to an embodiment of this application.

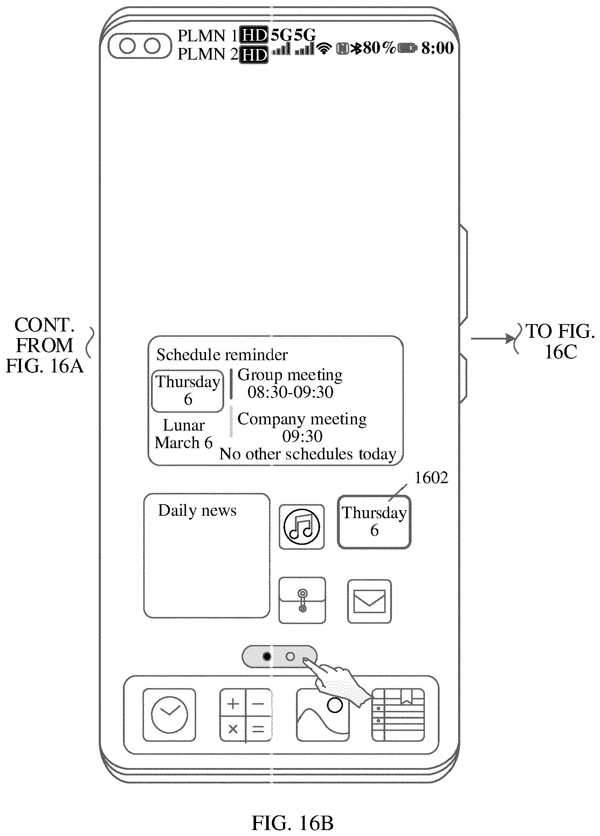

When the terminal device displays the main interface of the desktop as shown in FIG. 16A, and the terminal device receives a trigger operation performed by the user on the region 1601 in which the navigation point is located, the terminal device may display an interface shown in FIG. 16B.

On the interface shown in FIG. 16B, frequently used application icons (or frequently used cards) may be highlighted by default. For example, a calendar application icon 1602 is highlighted. For example, the terminal device may count a quantity of times of opening each icon on the desktop by the user, and then highlight at least one frequently used application icon (or frequently used card) in the preset region when the terminal device receives a trigger operation performed by the user on the region in which the navigation point is located.

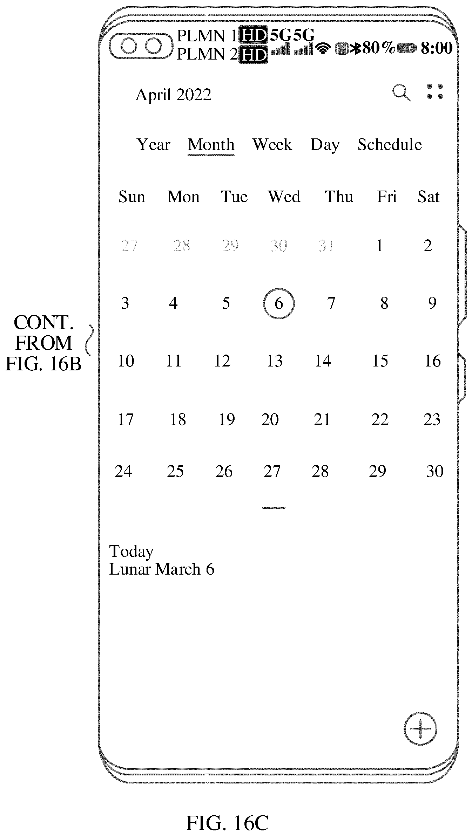

In a possible implementation, when there is one frequently used application, the terminal device may also display an interface corresponding to the frequently used application icon by default after highlighting the frequently used application icon for preset time. For example, one second after the terminal device displays the calendar application icon 1602 shown in FIG. 16B, the terminal device may open an interface corresponding to the calendar application by default, for example, switching from the interface shown in FIG. 16B to an interface shown in FIG. 16C. The preset time may be 1 second, 0.5 second, or the like.

In a possible implementation, when there are a plurality of frequently used applications, the terminal device may highlight icons of a plurality of frequently used applications whose frequencies are greater than a preset threshold. For example, when the terminal device receives a trigger operation performed by the user on a region 1601 in which the navigation point is located on the interface shown in FIG. 16A, and the terminal device determines that there are at least two frequently used applications, icons of the at least two frequently used applications may be displayed on the interface shown in FIG. 16B. In this case, the terminal device does not perform an operation of opening a frequently used application due to presence of the two frequently used applications.

Based on this, the terminal device may highlight at least one frequently used application icon (or frequently used card) in the preset region when receiving the trigger operation performed by the user on the region in which the navigation point is located, so that the user can conveniently find a most likely to-be-used application (or card) based on the highlighted frequently used application icon (or frequently used card), and the user's use of sense is improved.

Based on embodiments corresponding to FIG. 5A to FIG. 5C, when the terminal device receives a trigger operation performed by the user on an application icon in the dock bar outside the preset region, the terminal device may open an application in the dock bar.

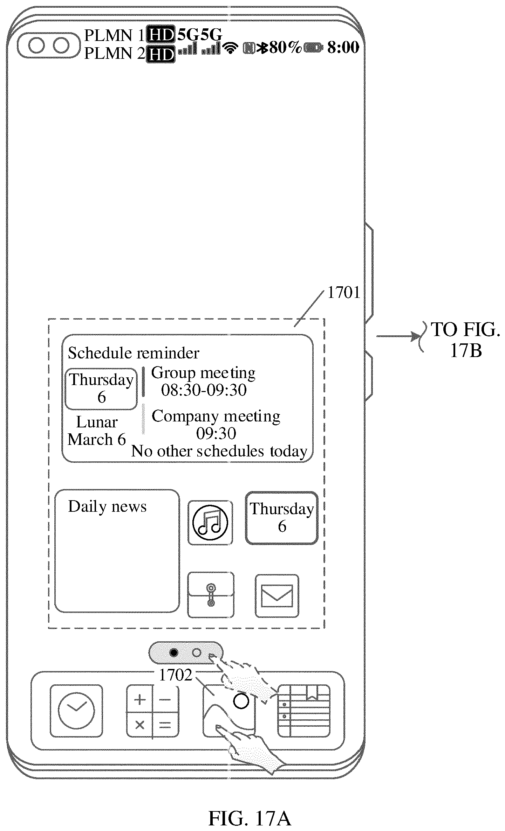

For example, FIG. 17A to FIG. 17C are a schematic interface diagram of triggering a dock bar according to an embodiment of this application.

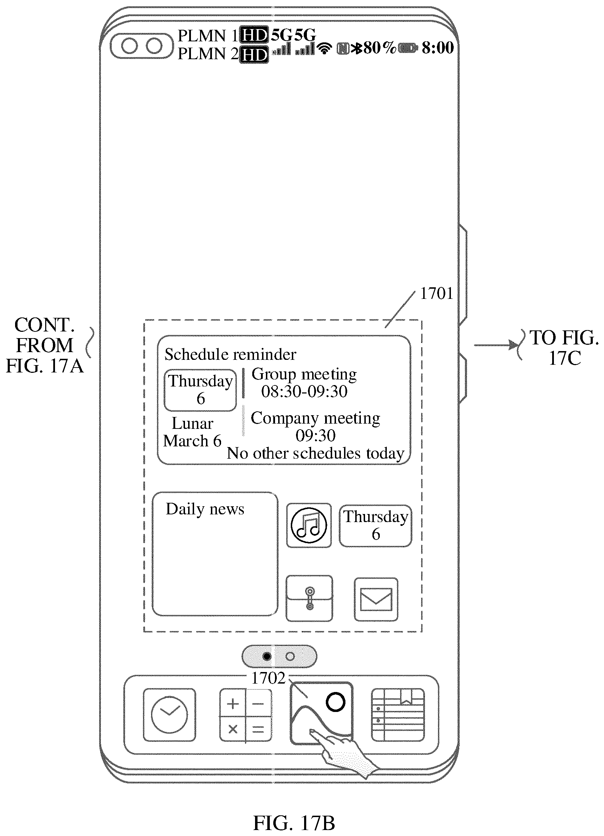

On an interface shown in FIG. 17A, when the first interface element in the target region is scaled down to a preset region 1701, and the terminal device receives an operation of moving the focus from the region in which the navigation point is located to a position in which a gallery application icon 1702 is located in the dock bar performed by the user, the terminal device may display an interface shown in FIG. 17B. For example, the terminal device highlights the gallery application icon.

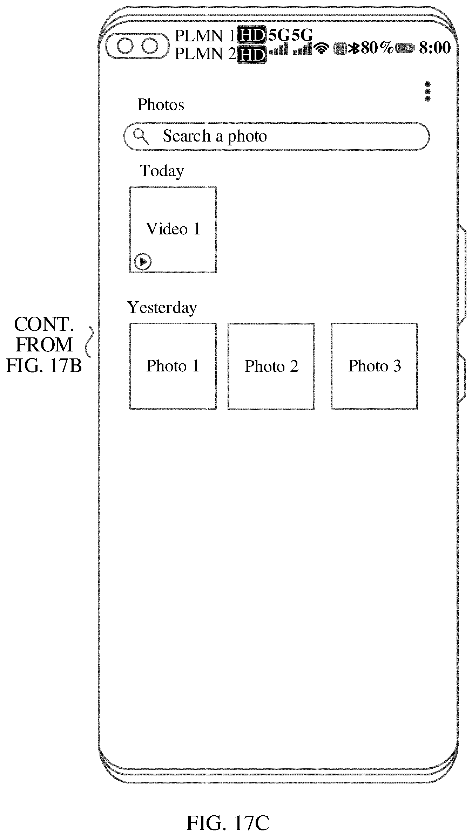

On the interface shown in FIG. 17B, when the focus is located in the position in which the gallery application icon 1702 is located, and the terminal device receives a release operation of the user, the terminal device may open a gallery application, and display an interface shown in FIG. 17C. The interface shown in FIG. 17C may include: a control displayed in the upper right corner of the display for opening more functions, a text box for searching a photo, and a plurality of photos and videos, such as a video 1 shot today, and a photo 1, a photo 2, and a photo 3 that are shot yesterday.

Based on this, when the terminal device scales down the first interface element in the target region to the preset region, the terminal device may conveniently open the application in the dock bar based on an operation of moving the focus to the application icon in the dock bar and releasing performed by the user.

In a possible implementation, the terminal device may resume displaying of the first interface element based on the operation of moving the focus to the application icon in the dock bar and releasing performed by the user. This is not limited in embodiments of this application.

Based on embodiments corresponding to FIG. 5A to FIG. 5C, when the terminal device receives any message, the message may be displayed on the lower side of the status bar of the display. The message may include a system message, an application message, an incoming call message, and the like. This is not limited in embodiments of this application.

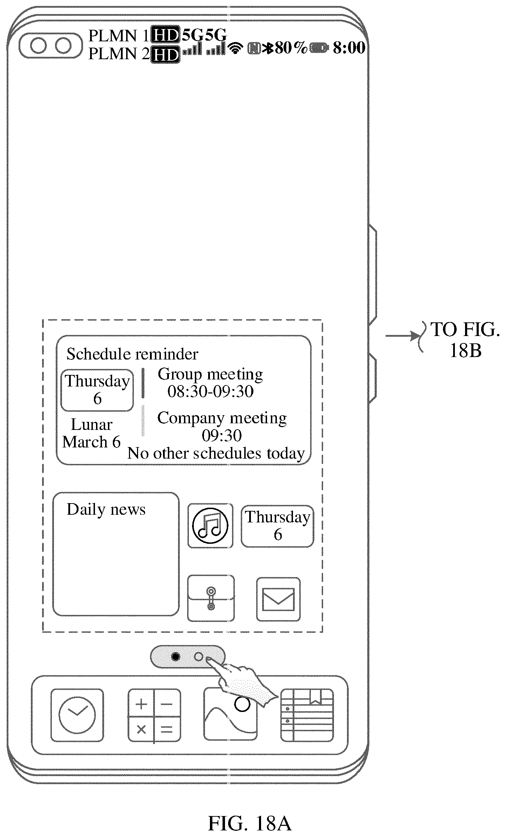

For example, FIG. 18A to FIG. 18C are a schematic interface diagram of receiving a new message according to an embodiment of this application. In embodiments corresponding to FIG. 18A to FIG. 18C, an example in which the any message is an email message is used for description, and this example does not constitute a limitation on embodiments of this application.

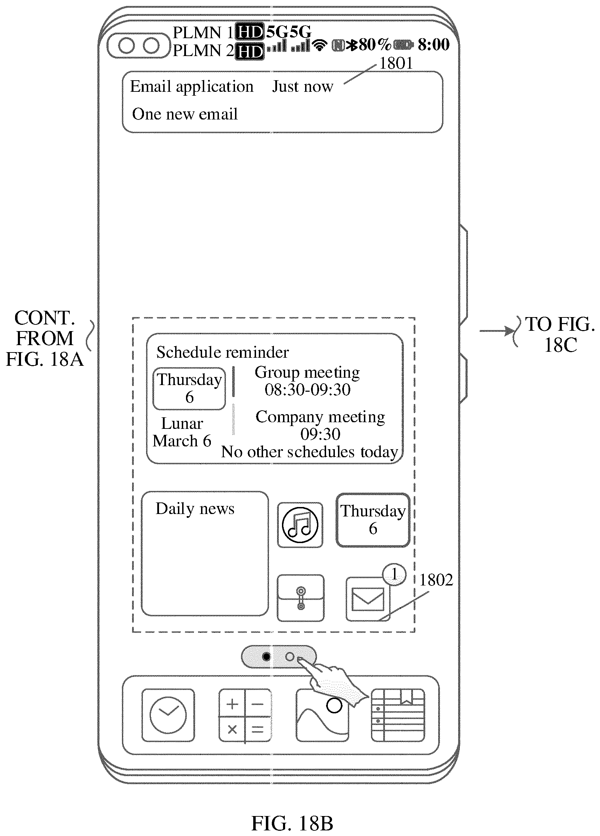

On an interface shown in FIG. 18A, when the terminal device scales down the first interface element in the target region to the preset region, and the terminal device receives an email message, the terminal device may display an interface shown in FIG. 18B. The interface shown in FIG. 18B may include an email message 1801, and an identifier indicating a quantity of messages may be displayed in the upper right corner of an email application icon 1802. The identifier may be displayed as 1. The email message 1801 may be displayed as follows: The email application just receives a new email, and the email message 1801 may be displayed in a form of a notification bar. If the user does not process a notification message on the interface shown in FIG. 18B, the notification message may be stored in a notification center, and the user may enter the notification center to view the message later. Alternatively, on the interface shown in FIG. 18B, the user may move the finger to the icon 1802 and release. In response to the release operation of the user, the mobile phone opens the email application and displays a new notification message.

It may be understood that when the terminal device receives any new message, the new message does not affect triggering of the user for the second interface element in the preset region. Further, on the interface shown in FIG. 18B, when the terminal device receives the release operation of the user, the terminal device may restore the display position of the icon in the preset region on the desktop, and the email message 1801 continues to be displayed on the desktop for notification. If the user triggers the email message 1801, the terminal device may open the email application and display an interface corresponding to the email message 1801.

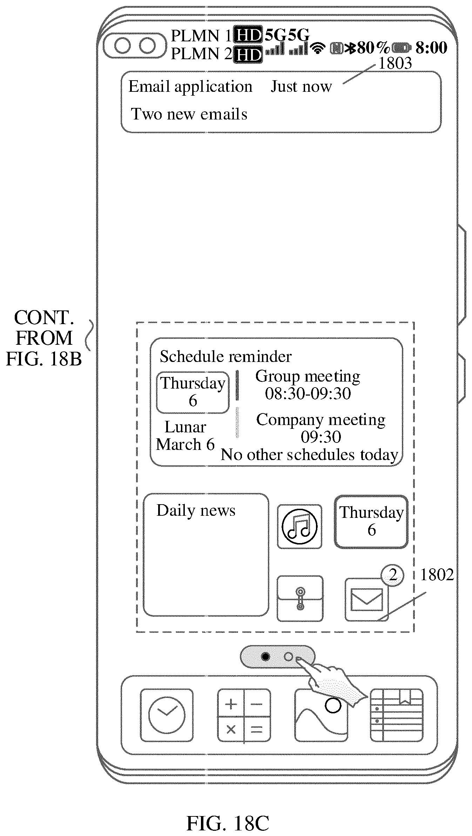

In a possible implementation, when the user does not view a new email in the email application, and the terminal device receives another email message, the terminal device may display an interface shown in FIG. 18C. The interface shown in FIG. 18C may include an email message 1803, and the identifier indicating the quantity of messages displayed in the upper right corner of the email application icon 1802 is 2. The email message 1803 may be displayed as follows: The email application just receives two new messages.

It may be understood that the second interface element in the preset region may support application refresh. On the interface shown in FIG. 18B and the interface shown in FIG. 18C, the identifier that indicates the quantity of messages and that corresponds to the email application icon 1802 may be refreshed from 1 to 2 based on a received application message.

In a possible implementation, when the second interface element is a card (an adapted first interface element is also a card), the terminal device may alternatively refresh content in the card based on the received message. For example, when the second interface element is a card for indicating the email message, the terminal device may alternatively update content in the card for indicating the email message based on the email message 1801 and the email message 1803, to implement card content refresh.

Based on this, when the terminal device receives any new message, the new message does not affect triggering of the user for the second interface element in the preset region.

In a possible implementation, when the second interface element is a card set (an adapted first interface element is also a card set), the second interface element may also support automatic page turning of cards in the card set. For example, when the second interface element that can support page turning exists in the terminal device, the second interface element may implement automatic page turning. Alternatively, the terminal device may support triggering performed by a plurality of fingers. For example, the terminal device may perform page turning on the second interface element based on a sliding operation performed by another finger of the user on the second interface element that can support sliding.

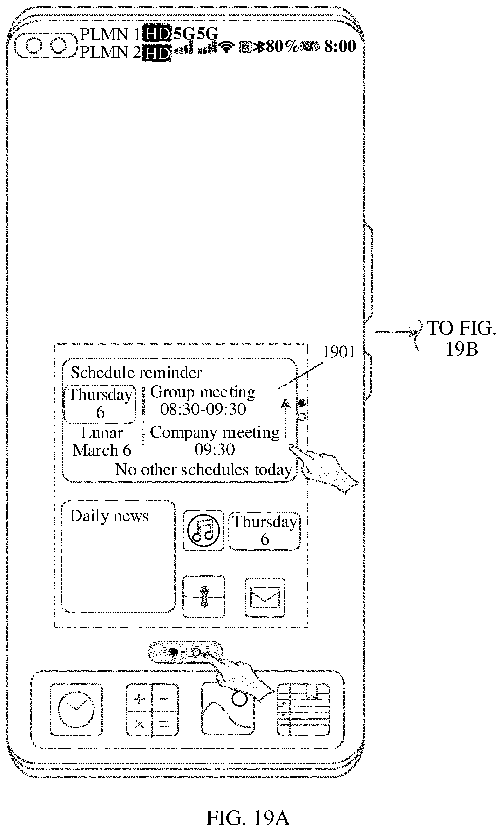

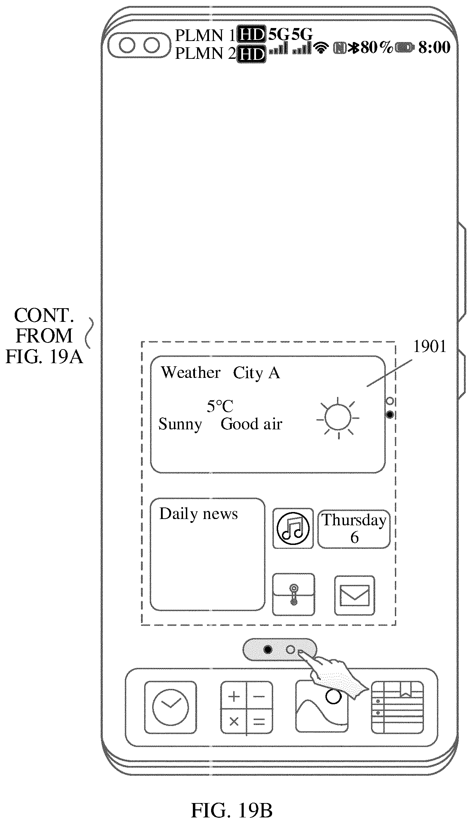

For example, FIG. 19A and FIG. 19B are a schematic interface diagram of turning a page of a card according to an embodiment of this application.

On an interface shown in FIG. 19A, a preset region may include a card set 1901, and the card set 1901 may include a plurality of cards. For example, the card set 1901 may include a card corresponding to a schedule reminder, a card corresponding to a weather (not shown on the interface shown in FIG. 19A), and the like. A type of the cards displayed in the card set 1901 and a quantity of cards are not limited in embodiments of this application.

When the focus of the terminal device shown in FIG. 19A is continuously located in the region in which the navigation point is located, the terminal device may display the card corresponding to the schedule reminder in the card set 1901. Further, when duration of the card corresponding to schedule reminder displaying in the card set 1901 exceeds a time threshold (for example, 10 seconds, 5 seconds, or the like), the terminal device may automatically turn a page of the card set 1901, and display an interface shown in FIG. 19B. Alternatively, when receiving an operation of sliding upward (or downward, leftward, rightward, or the like) in the card set 1901 performed by another finger of the user, the terminal device may turn a page of the card set 1901, and display an interface shown in FIG. 19B. On the interface shown in FIG. 19B, the card corresponding to the weather is displayed in the card set 1901, and the card corresponding to the weather may display weather information of a city A, for example, sunny, good air, and temperature of 5°C.

In a possible implementation, any card in the card set of the terminal device and the status bar at the top of the terminal device may be refreshed in real time based on a received message.

Based on this, the second interface element in the terminal device may also support the function of automatic page turning or page turning based on a user operation, so that content displayed by the second interface element in real time more complies with a use requirement of the user for a desktop icon.

In a possible implementation, when the second interface element is a folder (an adapted first interface element is also a folder), and the folder includes a plurality of application icons, the terminal device may view different applications in the folder based on a sliding operation performed by the user on the folder.

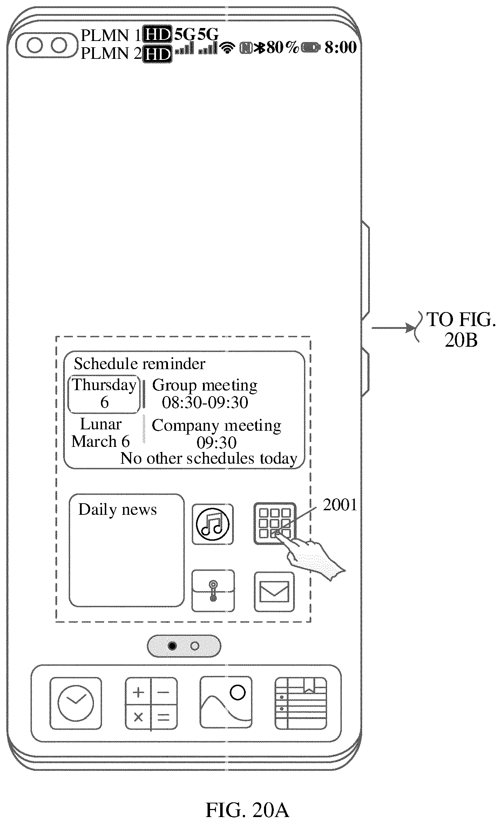

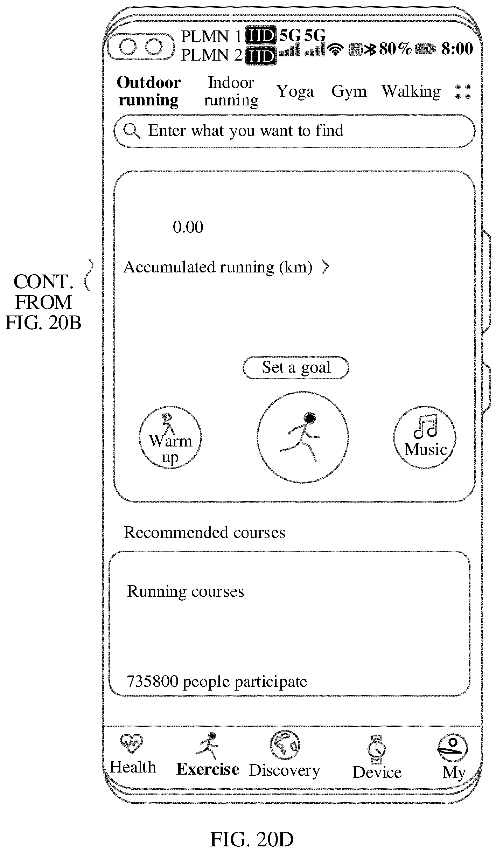

For example, FIG. 20A and FIG. 20D are a schematic interface diagram of turning a page of a folder according to an embodiment of this application.

The terminal device may display an interface shown in FIG. 20A, a preset region on the interface shown in FIG. 20A includes a folder 2001, and the folder 2001 may include a plurality of applications.

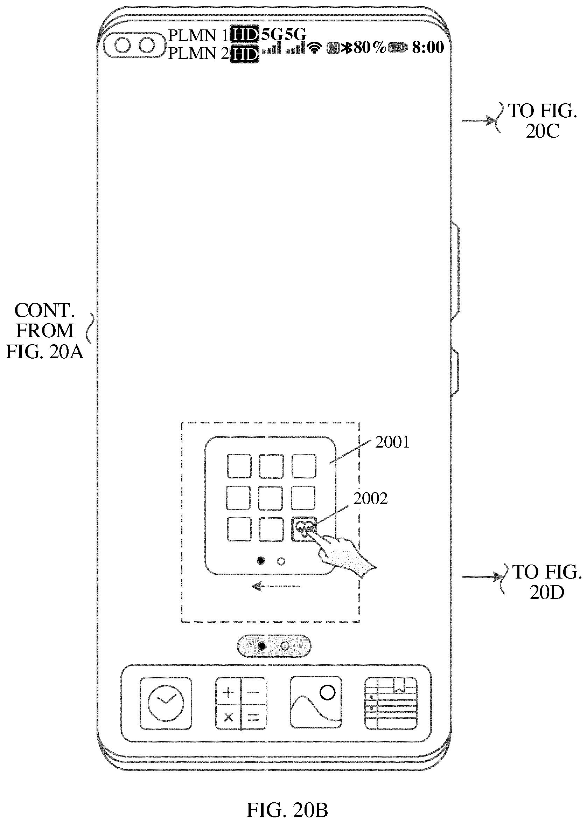

When duration in which the focus is continuously located in the folder 2001 on the interface shown in FIG. 20A exceeds a time threshold, the terminal device may expand and display the folder 2001 in the preset region, for example, displaying an interface shown in FIG. 20B. The interface shown in FIG. 20B may include: a plurality of application icons in the folder 2001, for example, a health application 2002.

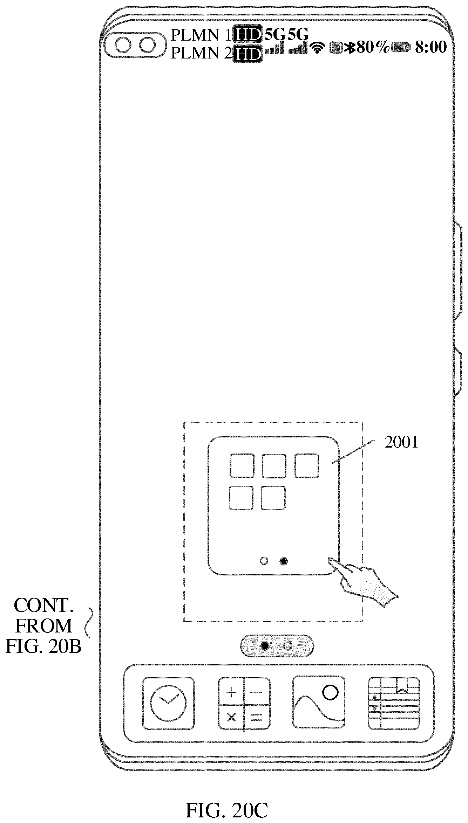

In a possible implementation, on the interface shown in FIG. 20B, when the focus of the terminal device is continuously located in the folder 2001, and the terminal device receives an operation of sliding leftward performed by the finger of the user in the folder 2001, the terminal device may turn a page of the folder 2001 and display an application in another page of the folder 2001, for example, displaying an interface shown in FIG. 20C.

Based on this, when the second interface element is a folder, the terminal device may turn a page of the folder based on a sliding operation performed by the finger of the user on the folder.

In a possible implementation, on the interface shown in FIG. 20B, when the terminal device receives an operation of moving the focus to the health application 2002 in the folder 2001, the terminal device may highlight the health application 2002, and open the health application 2002 in the folder 2001 when receiving a releasing operation of the user. For example, the terminal device may display an interface shown in FIG. 20D.

The interface shown in FIG. 20D may include: a control for indicating to start recording exercise data, a control for indicating to warm up, a control for indicating to start music, a text box for searching content, a control corresponding to an outdoor running function (the control corresponding to the outdoor running function is in a selected state), a control corresponding to an indoor running function, a control corresponding to a yoga function, a control corresponding to a gym function, a control corresponding to a walking function, a recommended course card, information for indicating accumulated running (kilometers), and a control for setting a running target. The interface shown in FIG. 20D further includes controls in a task bar at the bottom of the health application, for example, a health control for viewing another function in the health application, an exercise control, a discovery control, a device control, and a "my" control.

Based on this, when the second interface element is a folder, the terminal device may open an interface corresponding to any application based on the user opening the folder and performing a trigger operation on the any application in the folder.

Based on embodiments corresponding to FIG. 5A to FIG. 5C, when the terminal device receives any incoming call message, the incoming call message may be displayed in the terminal device in full screen. The incoming call message may alternatively be a video call message, a voice call message, or the like.

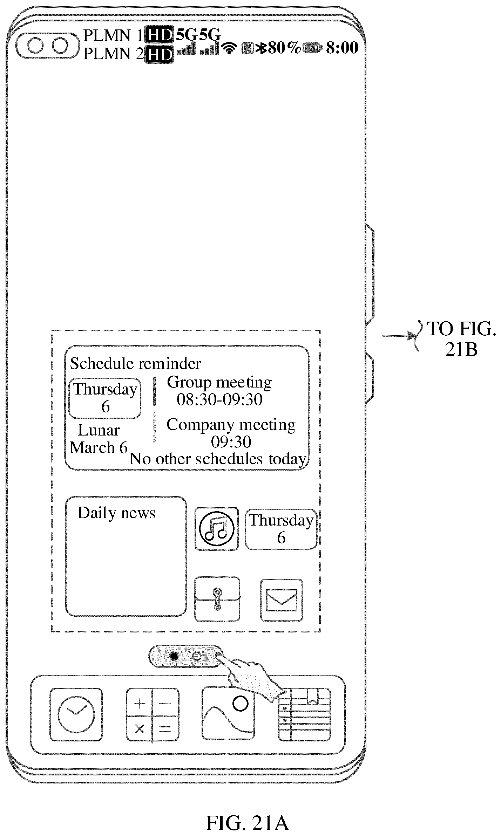

The incoming call message may be an incoming call message displayed in full screen. It may be understood that when the terminal device receives another message that can be displayed in full screen, for a process of receiving the message displayed in full screen when displaying the second interface element, refer to embodiments corresponding to FIG. 21A to FIG. 21E below. Details are not described again below.

For example, FIG. 21A to FIG. 21E are a schematic interface diagram of receiving an incoming call message according to an embodiment of this application.

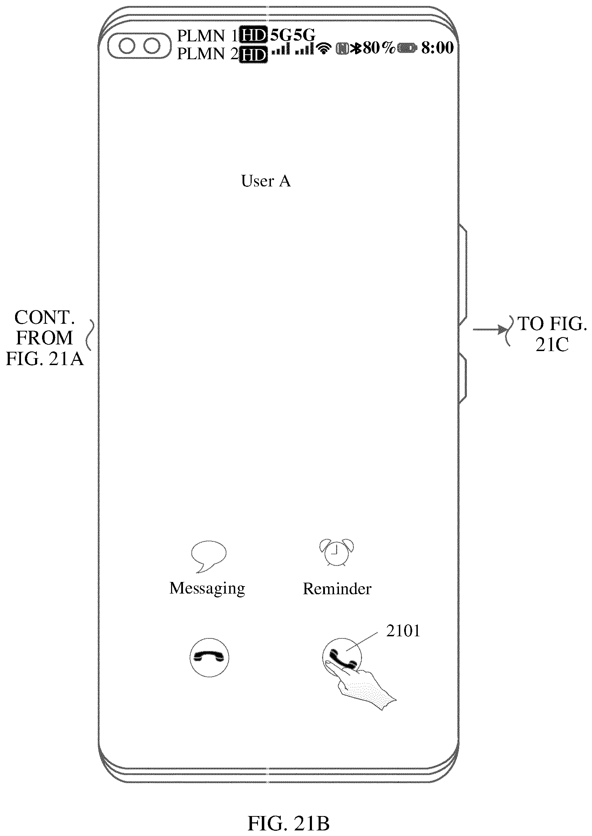

On an interface shown in FIG. 21A, when the first interface element in the target region is scaled down to the preset region, and the terminal device receives an incoming call message, the terminal device may interrupt displaying of the second interface element in the preset region, and further display an interface shown in FIG. 21B. The interface shown in FIG. 21B may include: a control 2101 for hanging up an incoming call, a control for answering an incoming call, a control for sending an SMS message, a control for setting an incoming call reminder, incoming call information, and the like. The incoming call information may be displayed as a user A.

In a possible implementation, if the finger of the user still remains on the interface shown in FIG. 21B, especially on the control 2101 for hanging up an incoming call, the control for answering an incoming call, the control for sending an SMS message, or the control for setting an incoming call reminder, the terminal device does not respond to the action of touching the screen by the user, to avoid an accidental touch, for example, hanging up or answering the call. In this case, the terminal device responds to a user operation only when the user lifts the finger from the interface and operates the control on the screen again.

For example, while the finger of the user still remains on the control 2101 for answering an incoming call on the interface shown in FIG. 21B, the terminal device does not respond to the operation of touching the control 2101 for answering an incoming call performed by the finger of the user, and the terminal device may display the interface shown in FIG. 21B.

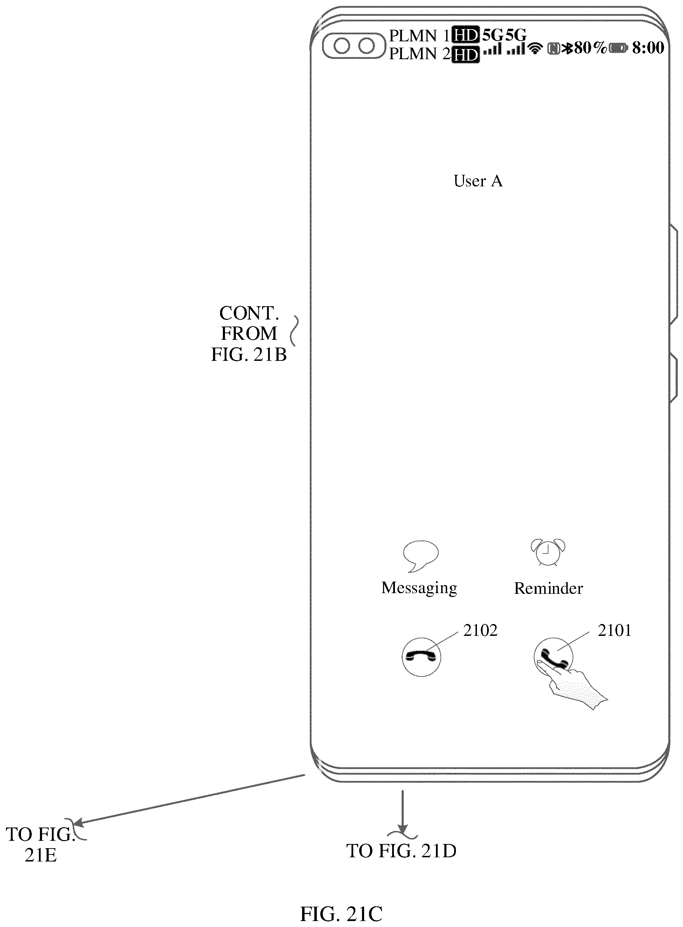

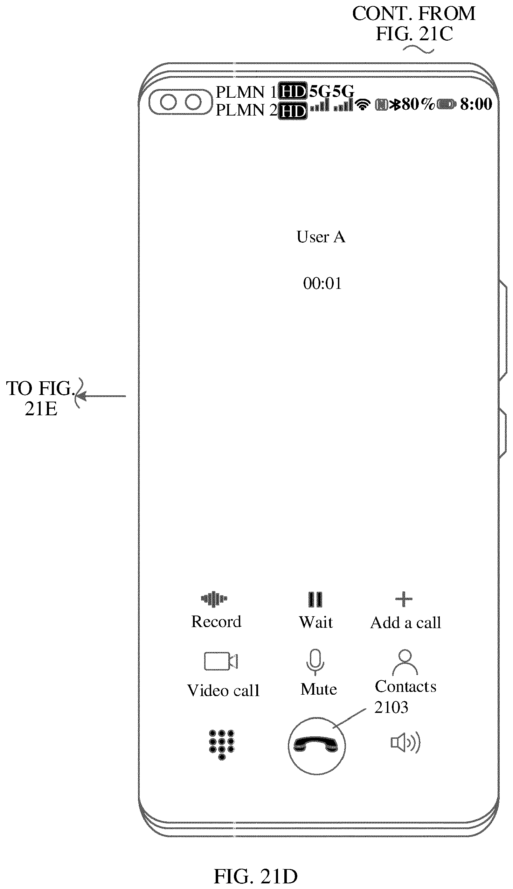

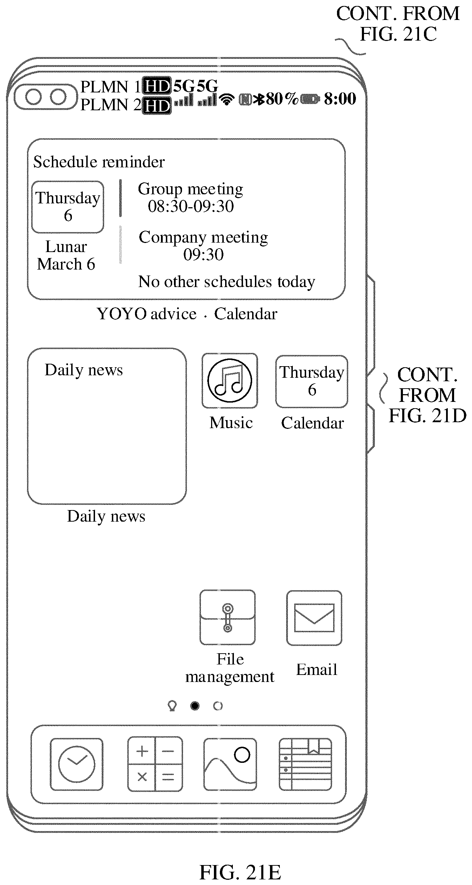

Further, when the terminal device receives that the user lifts the finger on the interface shown in FIG. 21B and triggers the control 2101 for answering an incoming call again, as shown in FIG. 21C, the user triggers the control 2101 for answering an incoming call again, the terminal device may display an interface corresponding to answering the incoming call as shown in FIG. 21D. The interface shown in FIG. 21D may include: information for indicating call duration, a control for recording, a control for waiting for a call, a control for adding a call, a control for a video call, a control for mute, a control for opening a contact, a control for opening a dial keyboard, a control 2103 for hanging up a call, a control for enabling hands-free, and the like
In a possible implementation, when the terminal device receives that the user hangs up the call, or receives a trigger operation performed by the user on the control 2102 for hanging up an incoming call on the interface shown in FIG. 21C, or receives a trigger operation performed by the user on the control 2103 for hanging up an incoming call on the interface shown in FIG. 21D, the terminal device may resume displaying of the first interface element, for example, displaying an interface shown in FIG. 21E. Content displayed on the interface shown in FIG. 21E may be similar to that on the interface shown in FIG. 1. Details are not described herein again.

In a possible implementation, when the incoming call message is displayed on the lower side of the status bar, the terminal device may open the incoming call message based on embodiments corresponding to FIG. 19A and FIG. 19B. Details are not described herein again.

Based on this, when the terminal device receives any incoming call message, the terminal device can interrupt displaying of the second interface element and display the incoming call message in full screen.

Based on embodiments corresponding to FIG. 4A to FIG. 4C, the terminal device may scale down content displayed on the desktop based on a trigger operation performed by the user on the navigation point.

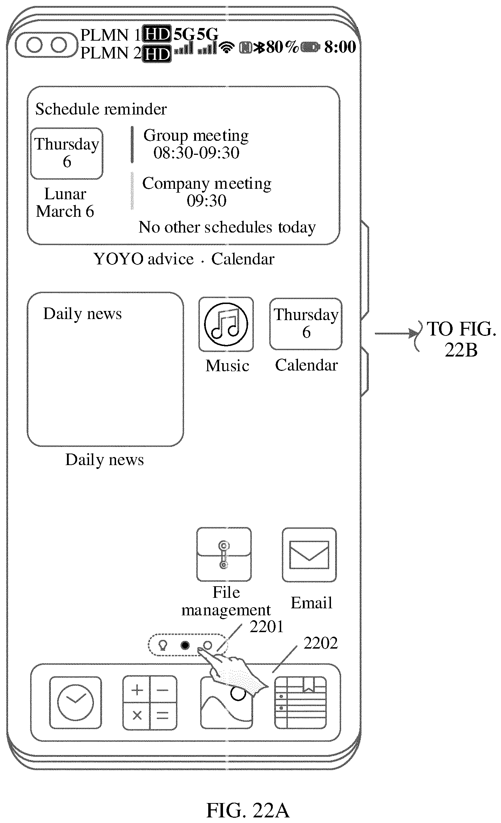

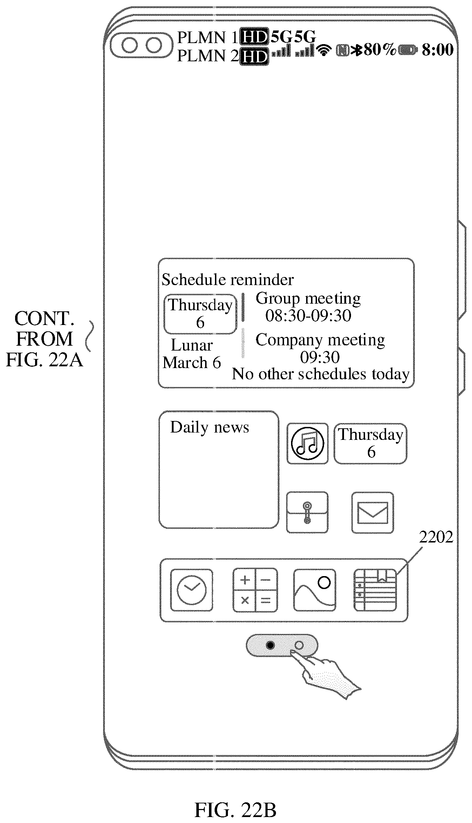

For example, FIG. 22A and FIG. 22B are another schematic interface diagram of scaling down a desktop according to an embodiment of this application.

When the terminal device displays the main interface of the desktop as shown in FIG. 22A, and the terminal device receives a trigger operation performed by the user on the region 2201 in which the navigation point is located, the terminal device may display an interface shown in FIG. 22B. On the interface shown in FIG. 22B, the terminal device may also scale down the dock bar, so that the scaled-down dock bar may also be displayed in the preset region of the terminal device.

It may be understood that when the user holds the terminal device by using the left hand and needs to trigger the rightmost application icon in the dock bar, it is difficult to trigger the rightmost application icon in the dock bar by using the finger of the left hand due to the large size of the terminal device or the small hand of the user. Therefore, the terminal device may scale down the icons except the navigation point and the status bar based on the trigger operation performed by the user on the region in which the navigation point is located, to implement flexible trigger of the user for the application displayed in the dock bar.

It may be understood that the interface provided in embodiments of this application is only an example, and does not constitute a limitation on embodiments of this application.

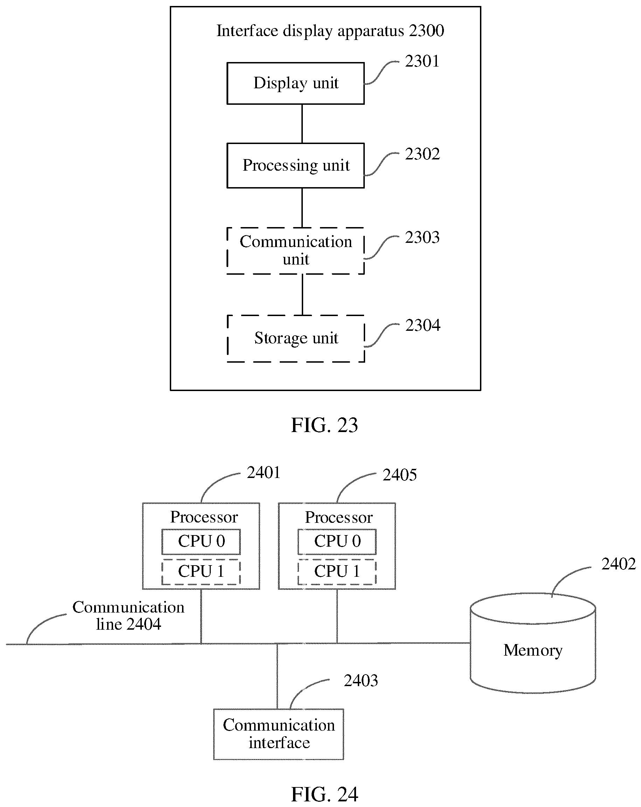

The method provided in embodiments of this application is described above with reference to FIG. 4A to FIG. 22B, and an apparatus for performing the method provided in examples of this application is described below. FIG. 23 is a schematic diagram of a structure of an interface display apparatus according to an example of this application. The interface display apparatus may be the terminal device in examples of this application, or may be a chip or a chip system in the terminal device.

As shown in FIG. 23, the interface display apparatus 2300 may be used in a communication device, a circuit, a hardware component, or a chip, and the interface display apparatus includes a display unit 2301 and a processing unit 2302. The display unit 2301 is configured to support the display steps performed by the interface display apparatus 2300. The processing unit 2302 is configured to support the information processing steps performed by the interface display apparatus 2300.

Details are as follows: An example of this application provides an interface display apparatus 2300, and the apparatus includes a display unit 2301 and a processing unit 2302. The display unit 2301 is configured to display a first interface on a display, where the first interface is a first desktop of the terminal device, and the first interface includes a first interface element, a dock dock bar, a first navigation point, and a status bar, and the first interface element is an element located between the first navigation point and the status bar on the first interface. The processing unit 2302 is configured to receive a first operation. In response to the first operation, the processing unit 2302 is configured to move the first interface element to a lower region of the first interface. After the first interface element stops moving, if the terminal device detect that the first operation is continuously performed on the display, the display unit 2301 is further configured to display a second interface on the display, where a second interface element corresponding to the first interface element is displayed in a lower region of the second interface, a displayed position of the dock bar on the second interface is the same as a displayed position of the dock bar on the first interface, a displayed position of the status bar on the second interface is the same as a displayed position of the status bar on the first interface, the second interface further includes a second navigation point, and a quantity of second navigation points is different from a quantity of first navigation points or a state of the second navigation point is different from a state of the first navigation point. In this way, the terminal device may move an icon displayed on a desktop based on a trigger operation performed by a user on a navigation point on the desktop, so that the user can trigger an element in any region of the desktop with one hand.

In a possible example, the interface display apparatus 2300 may alternatively include a communication unit 2303. Specifically, the communication unit is configured to support the interface display apparatus 2300 in performing the steps of sending and receiving data. The communication unit 2303 may be an input or output interface, a pin, a circuit, or the like.

In a possible example, the interface display apparatus may further include a storage unit 2304. The processing unit 2302 is connected to the storage unit 2304 through a bus. The storage unit 2304 may include one or more memories, and the memory may be one or more devices or components in a circuit that are used to store a program or data. The storage unit 2304 may exist independently, and is connected to the processing unit 2302 included by the interface display apparatus through a communication line. The storage unit 2304 may alternatively be integrated with the processing unit 2302.

The storage unit 2304 may store computer-executable instructions of the method of the terminal device, so that the processing unit 2302 performs the method in the foregoing embodiments. The storage unit 2304 may be a register, a cache, a RAM, or the like, and the storage unit 2304 may be integrated with the processing unit 2302. The storage unit 2304 may be a read-only memory (read-only memory, ROM) or another type of static storage device that may store static information and instructions, and the storage unit 2304 may be independent of the processing unit 2302.

FIG. 24 is a schematic diagram of a hardware structure of another terminal device according to an example of this application. As shown in FIG. 24, the terminal device may include a processor 2401, a communication line 2404, and at least one communication interface (for example, a communication interface 2403 is used as an example for description in FIG. 24).

The processor 2401 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 2404 may include a circuit configured to transmit information between the foregoing components.

The communication interface 2403 uses any apparatus of a transceiver type to communicate with another device or a communication network such as an Ethernet, wireless local area networks (wireless local area networks, WLAN), and the like.

Possibly, the terminal device may further include a memory 2402.

The memory 2402 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and is connected to the processor through the communication line 2404. The memory may be alternatively integrated with the processor.

The memory 2402 is configured to store computer-executable instructions for performing the solutions of this application, and is controlled and executed by the processor 2401. The processor 2401 is configured to execute the computer-executable instructions stored in the memory 2402, to implement the interface display method provided in embodiments of this application.

Possibly, the computer-executable instructions in examples of this application may also be referred to as application code. This is not specifically limited in examples of this application.

During specific implementation, in an example, the processor 2401 may include one or more CPUs, for example, a CPU 0 and a CPU 1 in FIG. 24.

During specific implementation, in an example, the terminal device may include a plurality of processors, for example, a processor 2401 and a processor 2405 in FIG. 24. Each of these processors may be a single-core (single-CPU) processor, or may be a multi-core (multi-CPU) processor. The processor herein may be one or more devices or circuits, and/or a processing core configured to process data (for example, computer program instructions).

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. The usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. All or some of methods in the foregoing embodiments may be implemented by using software, hardware, firmware, or any combination thereof. The computer-readable medium may include a computer storage medium and a communication medium, and may further include any medium that can transmit a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc, where the magnetic disk generally reproduces data in a magnetic manner, and the optical disc reproduces data optically by using laser.

The foregoing combination should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An interface display method, applied to a terminal device, wherein the terminal device comprises a display, and the method comprises:
displaying, by the terminal device, a first interface on the display, wherein the first interface is a first desktop of the terminal device, and the first interface comprises a first interface element (101), a dock bar, a first navigation point (102), and a status bar (100), and the first interface element is an element located between the first navigation point (102) and the status bar (100) on the first interface;
receiving, by the terminal device, a first operation;
in response to the first operation, moving, by the terminal device, the first interface element to a lower region of the first interface; and
after the first interface element stops moving, if the terminal device detects that the first operation is continuously performed on the display, displaying, by the terminal device, a second interface on the display, wherein a second interface element corresponding to the first interface element is a scaled-down first interface element displayed in a lower region of the second interface, a displayed position of the dock bar on the second interface is the same as a displayed position of the dock bar on the first interface, a displayed position of the status bar on the second interface is the same as a displayed position of the status bar on the first interface, the second interface further comprises a second navigation point, and a quantity of second navigation points is different from a quantity of first navigation points or a state of the second navigation point is different from a state of the first navigation point, wherein the second interface element is displayed in a preset region, and the preset region is located above the second navigation point and wherein the second interface element is displayed in the preset region according to a preset rule, wherein the preset rule is use for filling the second interface element in the preset region, and the preset rule comprises: column-based filling, row-based filling, or filling based on areas occupied by second interface elements from large to small;
wherein if the first interface element is a card set (1901), the method further comprises:
receiving, by the terminal device, an up-down movement of a focus in the second interface element corresponding to the card set, wherein content displayed in the second interface element corresponding to the card set follows the focus to turn a page; or
when the terminal device detects that displayed duration of the second interface element corresponding to the card set exceeds a time threshold, performing, by the terminal device, page turning on the second interface element corresponding to the card set.

2. The method according to claim 1, wherein the method further comprises:
in a moving process of the first interface element, or after the first interface element stops moving, if the terminal device detects that the first operation ends, displaying, by the terminal device, the first interface.

3. The method according to any one of claims 1 to 2, wherein
the first interface element comprises one or more of the following elements: an application icon, a card, or a folder icon.

4. The method according to claim 3, wherein the method further comprises:
if the first interface element is an application icon, when the terminal device displays the second interface, in response to receiving a first notification message,
displaying, by the terminal device, the first notification message on the second interface, and displaying a first identifier on a second interface element corresponding to the application icon on the second interface, wherein the first identifier indicates that the first notification message is received.

5. The method according to any one of claims 1 to 4, wherein the method further comprises:
when displaying the second interface, receiving, by the terminal device, a first message, wherein the first message comprises an incoming call notification, a video call notification, or a voice call notification;
in response to receiving the first message, displaying, by the terminal device, an interface corresponding to the first message in full screen, wherein the interface corresponding to the first message comprises at least one control;
when the terminal device detects that the first operation ends, continuing, by the terminal device, displaying the interface corresponding to the first message;
receiving, by the terminal device, a second operation performed on the at least one control; and
in response to the second operation, performing, by the terminal device, a function corresponding to the at least one control.

6. The method according to claim 3, wherein the method further comprises:
if the first interface element is a card, when the terminal device displays the second interface, in response to receiving a first notification message,
refreshing, by the terminal device, content displayed in a second interface element corresponding to the card on the second interface.

7. The method according to claim 3, wherein the method further comprises:
if the first interface element is a folder icon, detecting, by the terminal device, that a focus of the first operation moves from the second navigation point to a second interface element corresponding to the folder icon; and
expanding and displaying, by the terminal device, the second interface element corresponding to the folder icon; and receiving, by the terminal device, a left-right movement of the focus in the second interface element corresponding to the folder icon, wherein content displayed in the second interface element corresponding to the folder icon follows the focus to turn a page.

8. The method according to claim 7, wherein the second interface element corresponding to the folder icon comprises a target application icon, after the expanding and displaying, by the terminal device, the second interface element corresponding to the folder icon, the method further comprises:
detecting, by the terminal device, that a focus of the first operation moves from the second interface element corresponding to the folder icon to the target application icon;
highlighting, by the terminal device, the target application icon; and
when the terminal device detects that the first operation ends, displaying, by the terminal device, an interface corresponding to the target application icon.

9. The method according to any one of claims 1 to 8, wherein the first operation is an operation performed on the first navigation point (102), and the method further comprises:
detecting, by the terminal device, that the focus of the first operation moves from the second navigation point to the second interface element;
highlighting, by the terminal device, the second interface element; and
when the terminal device detects that the first operation ends, displaying, by the terminal device, an interface corresponding to the second interface element.

10. The method according to any one of claims 1 to 9, wherein the method further comprises:
detecting, by the terminal device, a left-right movement of the focus of the first operation on the second navigation point, and moving content displayed in the preset region with the left-right movement of the focus on the second navigation point;
wherein the detecting, by the terminal device, a left-right movement of the focus of the first operation on the second navigation point, and moving content displayed in the preset region with the left-right movement of the focus on the second navigation point comprises:
detecting, by the terminal device, that the focus of the first operation moves in a first direction on the second navigation point, and displaying, by the terminal device, a third interface, wherein a third interface element is displayed in a preset region of the third interface.

11. The method according to claim 10, wherein the method further comprises:
when displaying the first interface, receiving, by the terminal device, a third operation; and
in response to the third operation, displaying, by the terminal device, a fourth interface, wherein the fourth interface is a second desktop of the terminal device, the second desktop comprises a fourth interface element, the dock bar, a third navigation point, and the status bar, the third interface element is an interface element obtained after a size of the fourth interface element is reduced, and a state of the third navigation point is different from a state of the first navigation point.

12. The method according to claim 1, wherein the first interface further comprises a wallpaper, the second interface also comprises the wallpaper, and a size of the wallpaper on the first interface is the same as a size of the wallpaper on the second interface.

13. A terminal device, comprising a memory (121), a processor (110), and a computer program stored in the memory and executable on the processor, wherein when the processor executes the computer program, the terminal device is enabled to perform the method according to any one of claims 1 to 12.

14. A computer-readable storage medium, wherein the computer-readable storage medium stores a computer program; and when the computer program is executed by a processor, a computer is enabled to perform the method according to any one of claims 1 to 12.

## Patentansprüche

1. Ein Schnittstellendarstellungsverfahren, angewendet auf ein Endgerät, wobei das Endgerät ein Display umfasst, und das Verfahren Folgendes umfasst:
Anzeige einer ersten Oberfläche durch das Endgerät auf dem Display, wobei die erste Oberfläche ein erster Desktop des Endgeräts ist und die erste Oberfläche ein erstes Oberflächenelement (101), eine Dockleiste, einen ersten Navigationspunkt (102) und eine Statusleiste (100) umfasst, und das erste Oberflächenelement ist ein Element, das sich zwischen dem ersten Navigationspunkt (102) und der Statusleiste (100) auf der ersten Oberfläche befindet;
Empfangen einer ersten Bedienung durch das Endgerät;
als Reaktion auf die erste Bedienung Verschieben des ersten Oberflächenelements durch das Endgerät in einen unteren Bereich der ersten Oberfläche; und
nachdem das erste Oberflächenelement nicht mehr bewegt wird, sofern das Endgerät erkennt, dass die erste Bedienung weiterhin auf dem Display ausgeführt wird, Anzeige einer zweiten Oberfläche durch das Endgerät auf dem Display, wobei ein zweites Oberflächenelement, das dem ersten Oberflächenelement entspricht, ein verkleinertes erstes Oberflächenelement ist, das in einem unteren Bereich der zweiten Oberfläche angezeigt wird, die angezeigte Position der Dockleiste auf der zweiten Oberfläche der angezeigten Position der Dockleiste auf der ersten Oberfläche entspricht, die angezeigte Position der Statusleiste auf der zweiten Oberfläche der Position der Statusleiste auf der ersten Oberfläche entspricht, die zweite Oberfläche weiterhin einen zweiten Navigationspunkt umfasst und sich die Anzahl der zweiten Navigationspunkte von der Anzahl der ersten Navigationspunkte unterscheidet oder sich der Zustand des zweiten Navigationspunktes vom Zustand des ersten Navigationspunktes unterscheidet, wobei das zweite Oberflächenelement in einem voreingestellten Bereich angezeigt wird, und der voreingestellte Bereich oberhalb des zweiten Navigationspunktes liegt und wobei das zweite Oberflächenelement gemäß einer voreingestellten Regel im voreingestellten Bereich angezeigt wird, wobei die voreingestellte Regel für das Befüllen des zweiten Oberflächenelements im voreingestellten Bereich verwendet wird und die voreingestellte Regel umfasst: Spaltenweises Befüllen, zeilenweises Befüllen oder Befüllen basierend auf von großen zu kleinen Bereichen, die von zweiten Oberflächenelementen eingenommen werden;
wobei, wenn das erste Oberflächenelement eine Kartensammlung (1901) ist, das Verfahren weiterhin umfasst:
Empfangen einer Auf-Ab-Bewegung eines Fokus im zweiten Oberflächenelement, das der Kartensammlung entspricht, durch das Endgerät, wobei Inhalte, die im zweiten Oberflächenelement angezeigt werden und der Kartensammlung entsprechen, dem Fokus folgend umblättern; oder
wenn das Endgerät erkennt, dass die Anzeigedauer des zweiten Oberflächenelements, das der Kartensammlung entspricht, einen Zeitgrenzwert überschreitet, führt das Endgerät ein Umblättern im zweiten Oberflächenelement, das der Kartensammlung entspricht, durch.

2. Verfahren nach Anspruch 1, wobei das Verfahren ferner umfasst:
während eines Bewegungsprozesses des ersten Interface-Elements oder nachdem das erste Interface-Element die Bewegung beendet hat, falls das Endgerät erkennt, dass die erste Bedienung beendet ist, zeigt das Endgerät das erste Interface an.

3. Verfahren nach einem der Ansprüche 1 bis 2, wobei
das erste Interface-Element eines oder mehrere der folgenden Elemente umfasst: ein Applikationssymbol, eine Karte oder ein Ordnersymbol.

4. Verfahren nach Anspruch 3, wobei das Verfahren ferner umfasst:
wenn das erste Interface-Element ein Applikationssymbol ist, zeigt das Endgerät beim Anzeigen des zweiten Interfaces als Reaktion auf den Empfang einer ersten Benachrichtigung die erste Benachrichtigung an,
zeigt das Endgerät die erste Benachrichtigung auf dem zweiten Interface an und zeigt eine erste Kennung auf einem zweiten Interface-Element an, das dem Applikationssymbol auf dem zweiten Interface entspricht, wobei die erste Kennung anzeigt, dass die erste Benachrichtigung empfangen wurde.

5. Verfahren nach einem der Ansprüche 1 bis 4, wobei das Verfahren ferner umfasst:
beim Anzeigen des zweiten Interfaces empfängt das Endgerät eine erste Nachricht, wobei die erste Nachricht eine Benachrichtigung über einen eingehenden Anruf, einen Videoanruf oder einen Sprachanruf umfasst;
als Reaktion auf den Empfang der ersten Nachricht zeigt das Endgerät eine dem Inhalt der ersten Nachricht entsprechende Oberfläche im Vollbildmodus an, wobei diese Oberfläche mindestens ein Steuerelement umfasst;
wenn das Endgerät erkennt, dass die erste Bedienung beendet ist, zeigt das Endgerät weiterhin die der ersten Nachricht entsprechende Oberfläche an;
das Endgerät empfängt eine zweite Bedienung, die an dem mindestens einen Steuerelement ausgeführt wird; und
als Reaktion auf die zweite Bedienung führt das Endgerät eine dem mindestens einen Steuerelement entsprechende Funktion aus.

6. Verfahren nach Anspruch 3, wobei das Verfahren ferner umfasst:
wenn das erste Interface-Element eine Karte ist, zeigt das Endgerät beim Anzeigen des zweiten Interfaces als Reaktion auf den Empfang einer ersten Benachrichtigung,
aktualisiert das Endgerät die im zweiten Interface-Element, das der Karte auf dem zweiten Interface entspricht, angezeigten Inhalte.

7. Verfahren nach Anspruch 3, wobei das Verfahren ferner umfasst:
Wenn das erste Schnittstellenelement ein Ordnersymbol ist, erkennt das Endgerät, dass der Fokus der ersten Aktion vom zweiten Navigationspunkt zu einem zweiten Schnittstellenelement verschoben wird, das dem Ordnersymbol entspricht; und
Erweitern und Anzeigen des zweiten Schnittstellenelements, das dem Ordnersymbol entspricht, durch das Endgerät; und Empfangen einer Bewegung des Fokus nach links oder rechts innerhalb des zweiten Schnittstellenelements durch das Endgerät, wobei der im zweiten Schnittstellenelement angezeigte Inhalt dem Fokus folgt, um umzublättern.

8. Verfahren nach Anspruch 7, wobei das zweite Schnittstellenelement, das dem Ordnersymbol entspricht, ein Zielanwendungssymbol umfasst. Nach dem Erweitern und Anzeigen des zweiten Schnittstellenelements durch das Endgerät umfasst das Verfahren ferner:
Erkennen durch das Endgerät, dass der Fokus der ersten Aktion vom zweiten Schnittstellenelement, das dem Ordnersymbol entspricht, zum Zielanwendungssymbol verschoben wird;
Hervorheben des Zielanwendungssymbols durch das Endgerät; und
Wenn das Endgerät erkennt, dass die erste Aktion beendet ist, Anzeigen einer Schnittstelle, die dem Zielanwendungssymbol entspricht, durch das Endgerät.

9. Verfahren nach einem der Ansprüche 1 bis 8, wobei die erste Aktion eine am ersten Navigationspunkt (102) durchgeführte Aktion ist, und das Verfahren ferner umfasst:
Erkennen durch das Endgerät, dass der Fokus der ersten Aktion vom zweiten Navigationspunkt zum zweiten Schnittstellenelement verschoben wird;
Hervorheben des zweiten Schnittstellenelements durch das Endgerät; und
Wenn das Endgerät erkennt, dass die erste Aktion beendet ist, Anzeigen einer dem zweiten Schnittstellenelement entsprechenden Schnittstelle durch das Endgerät.

10. Verfahren nach einem der Ansprüche 1 bis 9, wobei das Verfahren ferner umfasst:
Erkennen durch das Endgerät einer links-rechts Bewegung des Fokus der ersten Aktion am zweiten Navigationspunkt und Verschieben des im voreingestellten Bereich angezeigten Inhalts mit der links-rechts Bewegung des Fokus am zweiten Navigationspunkt;
Wobei das Erkennen durch das Endgerät einer links-rechts Bewegung des Fokus der ersten Aktion am zweiten Navigationspunkt und das Verschieben des im voreingestellten Bereich angezeigten Inhalts mit der links-rechts Bewegung des Fokus am zweiten Navigationspunkt Folgendes umfasst:
Erkennen durch das Endgerät, dass sich der Fokus der ersten Bedienung in einer ersten Richtung auf den zweiten Navigationspunkt bewegt, und Anzeigen einer dritten Benutzeroberfläche durch das Endgerät, wobei ein drittes Oberflächenelement in einem voreingestellten Bereich der dritten Benutzeroberfläche angezeigt wird.

11. Verfahren nach Anspruch 10, wobei das Verfahren ferner umfasst:
beim Anzeigen der ersten Benutzeroberfläche ein drittes Bedienelement durch das Endgerät empfangen; und
als Reaktion auf das dritte Bedienelement Anzeigen einer vierten Benutzeroberfläche durch das Endgerät, wobei die vierte Benutzeroberfläche ein zweiter Desktop des Endgeräts ist, der zweite Desktop ein viertes Oberflächenelement, die Dockleiste, einen dritten Navigationspunkt und die Statusleiste umfasst, das dritte Oberflächenelement ein Interface-Element ist, das nach einer Größenreduktion des vierten Oberflächenelements erhalten wird, und der Zustand des dritten Navigationspunkts sich vom Zustand des ersten Navigationspunkts unterscheidet.

12. Verfahren nach Anspruch 1, wobei die erste Benutzeroberfläche ferner ein Hintergrundbild umfasst, die zweite Benutzeroberfläche ebenfalls das Hintergrundbild umfasst und die Größe des Hintergrundbilds auf der ersten Benutzeroberfläche der Größe des Hintergrundbilds auf der zweiten Benutzeroberfläche entspricht.

13. Ein Endgerät, umfassend einen Speicher (121), einen Prozessor (110) und ein im Speicher gespeichertes und auf dem Prozessor ausführbares Computerprogramm, wobei das Endgerät befähigt ist, beim Ausführen des Computerprogramms das Verfahren gemäß einem der Ansprüche 1 bis 12 durchzuführen.

14. Ein computerlesbares Speichermedium, wobei das computerlesbare Speichermedium ein Computerprogramm speichert und wenn das Computerprogramm von einem Prozessor ausgeführt wird, der Computer in der Lage ist, das Verfahren gemäß einem der Ansprüche 1 bis 12 auszuführen.

## Revendications

1. Procédé d'affichage d'interface, appliqué à un dispositif terminal, ledit dispositif terminal comprenant un écran d'affichage, et ledit procédé comprenant :
l'affichage, par le dispositif terminal, d'une première interface sur l'écran, ladite première interface étant le premier bureau du dispositif terminal, et la première interface comprenant un premier élément d'interface (101), une barre de dock, un premier point de navigation (102) et une barre d'état (100), le premier élément d'interface étant un élément situé entre le premier point de navigation (102) et la barre d'état (100) sur la première interface ;
la réception, par le dispositif terminal, d'une première opération ;
en réponse à la première opération, le déplacement, par le dispositif terminal, du premier élément d'interface vers une région inférieure de la première interface ; et
après l'arrêt du mouvement du premier élément d'interface, si le dispositif terminal détecte que la première opération est effectuée de manière continue sur l'écran, l'affichage, par le dispositif terminal, d'une deuxième interface sur l'écran, où un deuxième élément d'interface correspondant au premier élément d'interface est un premier élément d'interface réduit affiché dans une région inférieure de la deuxième interface, la position affichée de la barre de dock sur la deuxième interface étant identique à la position affichée de la barre de dock sur la première interface, la position affichée de la barre d'état sur la deuxième interface étant identique à la position affichée de la barre d'état sur la première interface, la deuxième interface comprenant en outre un deuxième point de navigation, et le nombre de deuxièmes points de navigation étant différent du nombre de premiers points de navigation ou l'état du deuxième point de navigation étant différent de l'état du premier point de navigation, le deuxième élément d'interface étant affiché dans une région prédéfinie, la région prédéfinie étant située au-dessus du deuxième point de navigation et le deuxième élément d'interface étant affiché dans la région prédéfinie selon une règle prédéfinie, ladite règle prédéfinie servant à remplir le deuxième élément d'interface dans la région prédéfinie, ladite règle prédéfinie comprenant : un remplissage selon la colonne, un remplissage selon la ligne, ou un remplissage en fonction de la taille des zones occupées par les deuxièmes éléments d'interface, du plus grand au plus petit ;
si le premier élément d'interface est un ensemble de cartes (1901), le procédé comprend en outre :
la réception, par le dispositif terminal, d'un mouvement de focus bas-haut dans le deuxième élément d'interface correspondant à l'ensemble de cartes, le contenu affiché dans le deuxième élément d'interface correspondant à l'ensemble de cartes suivant le focus pour tourner la page ; ou
lorsque le dispositif terminal détecte que la durée d'affichage du deuxième élément d'interface correspondant à l'ensemble de cartes dépasse un seuil de temps, exécuter, par le dispositif terminal, le changement de page du deuxième élément d'interface correspondant à l'ensemble de cartes.

2. Le procédé selon la revendication 1, dans lequel le procédé comprend en outre :
au cours du déplacement du premier élément d'interface, ou après que le premier élément d'interface a cessé de bouger, si le dispositif terminal détecte que la première opération est terminée, afficher, par le dispositif terminal, la première interface.

3. Le procédé selon l'une quelconque des revendications 1 à 2, dans lequel
le premier élément d'interface comprend un ou plusieurs des éléments suivants : une icône d'application, une carte ou une icône de dossier.

4. Le procédé selon la revendication 3, dans lequel le procédé comprend en outre :
si le premier élément d'interface est une icône d'application, lorsque le dispositif terminal affiche la seconde interface, en réponse à la réception d'un premier message de notification,
afficher, par le dispositif terminal, le premier message de notification sur la seconde interface, et afficher un premier indicateur sur un second élément d'interface correspondant à l'icône d'application sur la seconde interface, ledit premier indicateur signalant que le premier message de notification a été reçu.

5. Le procédé selon l'une quelconque des revendications 1 à 4, dans lequel le procédé comprend en outre :
lors de l'affichage de la seconde interface, recevoir, par le dispositif terminal, un premier message, celui-ci comprenant une notification d'appel entrant, une notification d'appel vidéo ou une notification d'appel vocal ;
en réponse à la réception du premier message, afficher, par le dispositif terminal, une interface correspondant au premier message en plein écran, ladite interface comprenant au moins un contrôle ;
lorsque le dispositif terminal détecte que la première opération est terminée, continuer, par le dispositif terminal, à afficher l'interface correspondant au premier message ;
recevoir, par le dispositif terminal, une seconde opération effectuée sur au moins un contrôle ; et
en réponse à la seconde opération, exécuter, par le dispositif terminal, une fonction correspondant audit contrôle ou auxdits contrôles.

6. Le procédé selon la revendication 3, dans lequel le procédé comprend en outre :
si le premier élément d'interface est une carte, lorsque le dispositif terminal affiche la seconde interface, en réponse à la réception d'un premier message de notification,
actualiser, par le dispositif terminal, le contenu affiché dans un second élément d'interface correspondant à la carte sur la seconde interface.

7. Le procédé selon la revendication 3, dans lequel le procédé comprend en outre :
si le premier élément d'interface est une icône de dossier, détecter, par le dispositif terminal, que le focus de la première opération passe du deuxième point de navigation à un deuxième élément d'interface correspondant à l'icône de dossier ; et
développer et afficher, par le dispositif terminal, le deuxième élément d'interface correspondant à l'icône de dossier ; et recevoir, par le dispositif terminal, un déplacement gauche-droite du focus dans le deuxième élément d'interface correspondant à l'icône de dossier, le contenu affiché dans le deuxième élément d'interface correspondant à l'icône de dossier suivant le focus pour tourner la page.

8. Le procédé selon la revendication 7, dans lequel le deuxième élément d'interface correspondant à l'icône de dossier comprend une icône d'application cible, après le développement et l'affichage, par le dispositif terminal, du deuxième élément d'interface correspondant à l'icône de dossier, le procédé comprend en outre :
détecter, par le dispositif terminal, que le focus de la première opération passe du deuxième élément d'interface correspondant à l'icône de dossier à l'icône d'application cible ;
mettre en surbrillance, par le dispositif terminal, l'icône d'application cible ; et
lorsque le dispositif terminal détecte que la première opération est terminée, afficher, par le dispositif terminal, une interface correspondant à l'icône d'application cible.

9. Le procédé selon l'une quelconque des revendications 1 à 8, dans lequel la première opération est une opération effectuée sur le premier point de navigation (102), et le procédé comprend en outre :
détecter, par le dispositif terminal, que le focus de la première opération passe du deuxième point de navigation au deuxième élément d'interface ;
mettre en surbrillance, par le dispositif terminal, le deuxième élément d'interface ; et
lorsque le dispositif terminal détecte que la première opération est terminée, afficher, par le dispositif terminal, une interface correspondant au deuxième élément d'interface.

10. Le procédé selon l'une quelconque des revendications 1 à 9, dans lequel le procédé comprend en outre :
détecter, par le dispositif terminal, un déplacement gauche-droite du focus de la première opération sur le deuxième point de navigation, et déplacer le contenu affiché dans la région prédéfinie avec le déplacement gauche-droite du focus sur le deuxième point de navigation ;
où le fait de détecter, par le dispositif terminal, un déplacement gauche-droite du focus de la première opération sur le deuxième point de navigation, et de déplacer le contenu affiché dans la région prédéfinie avec le déplacement gauche-droite du focus sur le deuxième point de navigation comprend :
détecter, par le dispositif terminal, que le focus de la première opération se déplace dans une première direction sur le second point de navigation, et afficher, par le dispositif terminal, une troisième interface, dans laquelle un troisième élément d'interface est affiché dans une zone prédéfinie de la troisième interface.

11. Le procédé selon la revendication 10, dans lequel le procédé comprend en outre :
lors de l'affichage de la première interface, recevoir, par le dispositif terminal, une troisième opération ; et
en réponse à la troisième opération, afficher, par le dispositif terminal, une quatrième interface, la quatrième interface étant un deuxième bureau du dispositif terminal, le deuxième bureau comportant un quatrième élément d'interface, la barre du dock, un troisième point de navigation et la barre d'état ; le troisième élément d'interface est un élément d'interface obtenu après la réduction de la taille du quatrième élément d'interface, et l'état du troisième point de navigation est différent de l'état du premier point de navigation.

12. Le procédé selon la revendication 1, dans lequel la première interface comprend également un fond d'écran, la deuxième interface comprend également le fond d'écran, et la taille du fond d'écran sur la première interface est la même que celle du fond d'écran sur la deuxième interface.

13. Un dispositif terminal, comprenant une mémoire (121), un processeur (110) et un programme informatique stocké dans la mémoire et exécutable sur le processeur, dans lequel, lorsque le processeur exécute le programme informatique, le dispositif terminal est apte à réaliser le procédé selon l'une quelconque des revendications 1 à 12.

14. Un support de stockage lisible par ordinateur, ledit support stockant un programme informatique ; et lorsque le programme informatique est exécuté par un processeur, un ordinateur est apte à réaliser le procédé selon l'une quelconque des revendications 1 à 12.
